(19) Europäisches Patentamt
European Patent Office
Office européen des brevets

(11) **EP 4 503 178 A1**

(12) **EUROPEAN PATENT APPLICATION**
published in accordance with Art. 153(4) EPC

(43) Date of publication:
**05.02.2025 Bulletin 2025/06**

(21) Application number: 23779321.1

(22) Date of filing: 07.03.2023

(51) International Patent Classification (IPC):
$H01M\ 4/1397^{(2010.01)}$    $C09K\ 23/52^{(2022.01)}$
$H01M\ 4/136^{(2010.01)}$    $H01M\ 4/36^{(2006.01)}$
$H01M\ 4/58^{(2010.01)}$

(52) Cooperative Patent Classification (CPC):
C09K 23/52; H01M 4/136; H01M 4/1397;
H01M 4/36; H01M 4/58; H01M 4/62; H01M 10/052;
Y02E 60/10

(86) International application number:
**PCT/JP2023/008637**

(87) International publication number:
**WO 2023/189294 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022059257**

(71) Applicants:
• **artience Co., Ltd.**
**Chuo-ku**
**Tokyo 104-0031 (JP)**
• **TOYOCOLOR CO., LTD.**
**Tokyo 104-8381 (JP)**

(72) Inventors:
• **FUKAGAWA Soichiro**
**Tokyo 104-8381 (JP)**
• **AOKI Kota**
**Tokyo 104-8381 (JP)**
• **MORITA Yu**
**Tokyo 104-8381 (JP)**
• **TSUBOYA Kazuhiko**
**Tokyo 104-8381 (JP)**

(74) Representative: **Becker, Eberhard**
**Becker Kurig & Partner**
**Patentanwälte mbB**
**Bavariastraße 7**
**80336 München (DE)**

(54) **SLURRY FOR POSITIVE ELECTRODE FILMS, POSITIVE ELECTRODE FILM, SECONDARY BATTERY AND METHOD FOR PRODUCING POSITIVE ELECTRODE FILM**

(57) The present invention provides a slurry for positive electrode films, the slurry containing a lithium iron phosphate-based positive electrode active material, a dispersant, a binder resin and a solvent, wherein the dispersant contains a copolymer (A) that has a structural unit having a nitrile group and a structural unit derived from a conjugated diene in which unsaturated bonds are partially hydrogenated, while having a mass ratio (RDB) of residual double bonds of 0.05-5% by mass as calculated by formula (1). (1): RDB (% by mass) = (BD/(BD + HBD)) × 100 (In formula (1), BD represents the mass ratio of structural units derived from conjugated dienes which have an unsaturated bond relative to the total mass of structural units derived from conjugated dienes; and HBD represents the mass ratio of structural units derived from conjugated dienes in which an unsaturated bond is hydrogenated relative to the total mass of structural units derived from conjugated dienes which have an unsaturated bond relative to the total mass of structural units derived from conjugated dienes.)

FIG. 1

**Description**

Technical Field

The present invention relates to a slurry for positive electrode film, a positive electrode film, a secondary battery, and a method for producing a positive electrode film.

Related Art

With the widespread adoption of electric vehicles and the miniaturization and enhancement of portable devices, there is an increasing demand for secondary batteries with high energy density and, furthermore, for higher capacity secondary batteries. Under these circumstances, secondary batteries characterized by high energy density and high voltage, such as lithium-ion secondary batteries, are increasingly being utilized in numerous devices.

The positive electrode of a secondary battery is manufactured by applying a slurry for positive electrode film, which contains the positive electrode active material, onto a current collector. In the case of a high energy density, high capacity secondary battery, generally, lithium transition metal composite oxides having a layered or spinel crystal structure, such as a compound in which lithium cobalt oxide, lithium manganese oxide, lithium nickel oxide, and some of these metal elements are replaced with a different metal element, are generally used as the positive electrode active material. These lithium transition metal composite oxides are characterized by having a high potential of about 4 V to 5 V relative to metallic lithium, depending on the crystal structure, the type of metal element, and the compounding ratio of the metal elements. However, these lithium transition metal composite oxides have problems such as thermal stability, performance deterioration due to composition changes during charge and discharge cycles, high costs due to the use of rare metals, and instability in the supply of raw materials. As a measure to improve these conditions, lithium iron phosphate-based positive electrode active materials, which include the resource-abundant and cost-effective element iron and exhibit excellent structural stability during charge and discharge cycles, have been attracting attention. Due to the relatively high potential of about 3.4 V against metallic lithium, lithium iron phosphate-based positive electrode active materials are anticipated to be highly practical materials.

However, since lithium iron phosphate, represented by $LiFePO_4$ and characterized by an olivine structure, exhibits extremely poor electron conductivity compared to layered type and spinel type positive electrode active material and has a low lithium ion conductivity within the crystal, to increase the conductivity and thus increase the discharge capacity in batteries, methods of coating the surface of lithium iron phosphate with conductive carbon materials have been considered (see Patent Document 1 and Patent Document 2). Further, Patent Document 3 discloses the production of a high-performance electrode using a composition containing lithium iron phosphate coated with a carbon material and carbon nanotubes (CNTs).

Further, in order to increase the electric conductivity and ionic conductivity of lithium iron phosphate-based positive electrode active material, it has been considered to enhance the electric conductivity by coating the surface of the lithium iron phosphate-based positive electrode active material with carbon, and to enhance the ionic conductivity by reducing the particle size of the lithium iron phosphate-based positive electrode active material (see Patent Document 4 and Patent Document 5).

Patent Document 4 proposes a method to improve the dispersibility of lithium iron phosphate-based positive electrode active material with reduced particle size by preparing a positive electrode active material pre-dispersing agent using hydrogenated nitrile butadiene rubber as a dispersant, and subsequently adding a conductive material and a binder to prepare a slurry composition for the positive electrode. Patent Document 5 proposes a method to improve the dispersibility of lithium iron phosphate-based positive electrode active material with reduced particle size by preparing a paste containing lithium iron phosphate-based positive electrode active material, conductive material, binder, and solvent, and then producing a slurry for the positive electrode by mixing while adding the solvent.

On the other hand, although in the slurry for positive electrode film, the conductivity of the positive electrode may be increased by adding a conductive material such as carbon nanotubes to increase its dispersibility, the use of hydrogenated nitrile butadiene rubber has been considered for the purpose of improving the dispersibility of conductive materials (see Patent Document 6 and Patent Document 7). Patent Document 6 discloses a conductive material dispersing agent that increase the dispersibility of the conductive material by using a copolymer A, which contains a structural unit with nitrile group and a aliphatic hydrocarbon structural unit, as a dispersant, and discloses that by adding a binder resin and an electrode active material to this conductive material dispersing agent, a slurry for an electrode film may be provided. Patent Document 7 discloses a carbon nanotube dispersion liquid in which bundle-type carbon nanotubes are dispersed using a partially hydrogenated nitrile rubber whose residual double bond value is 0.5 to 40 mass %, where the residual double bond value is a mass ratio of a structural unit derived from a conjugated diene to a total mass of a structural unit derived from a conjugated diene and a hydrogenated structural unit derived from a conjugated diene in a nitrile rubber. Patent Document 7 also discloses that a binder resin and an electrode active material are added to this carbon nanotube dispersion liquid to provide a slurry for electrode.

Citation List

Patent Document

[Patent Document 1] Japanese Patent Laid-Open No. 2016-149296.
[Patent Document 2] Domestic Re-publication of PCT international application No. 2017/154592.
[Patent Document 3] Published Japanese Translation No. 2012-521065 of the PCT International Publication.
[Patent Document 4] Published Japanese Translation No. 2020-515014 of the PCT International Publication.
[Patent Document 5] Published Japanese Translation No. 2020-515012 of the PCT International Publication.
[Patent Document 6] Japanese Patent No. 6933285.
[Patent Document 7] Published Japanese Translation No. 2018-522803 of the PCT International Publication.

SUMMARY OF INVENTION

Technical Problem

Although the partially hydrogenated nitrile butadiene rubber may contribute to the dispersibility of lithium iron phosphate, some carbon-carbon double bonds remain as unsaturated bonds without being hydrogenated, which may impair oxidation resistance. When partially hydrogenated nitrile butadiene rubber undergoes oxidation while incorporated in the electrode, it can lead to a deterioration in battery.

In the technologies disclosed in Patent Documents 4 and 5, based on the knowledge that partially hydrogenated nitrile butadiene rubber has low solubility in a solvent, the order and method of using the partially hydrogenated nitrile butadiene rubber are devised to obtain dispersibility of the lithium iron phosphate. Further, although the technologies disclosed in Patent Documents 4 and 5 involve the production of a positive electrode that contains a conductive material such as carbon material in addition to lithium iron phosphate, it has not been resolved whether good dispersibility may be maintained by the partially hydrogenated nitrile butadiene rubber when lithium iron phosphate and carbon material are mixed together.

According to the technologies of Patent Documents 6 and 7, hydrogenated nitrile butadiene rubber also contributes to the dispersibility of conductive materials such as carbon nanotubes. Specifically, in the technology disclosed in Patent Document 7, the residual double bond value of hydrogenated nitrile butadiene rubber for dispersing carbon nanotubes is 40 mass % or less, which differs in structure from the hydrogenated nitrile butadiene rubber disclosed for dispersing lithium iron phosphate in Patent Documents 4 and 5. For this reason, in the slurry for positive electrode film, sufficient consideration has not been given to obtaining dispersibility of lithium iron phosphate as a positive electrode active material while obtaining dispersibility of carbon nanotubes or the like as a conductive material.

The problems to be solved by the present invention include providing a slurry for positive electrode film with excellent storage stability, providing a positive electrode film with excellent conductivity and oxidation resistance along with a method for producing the same, and providing a secondary battery with high safety and excellent lifecycle characteristics.

Solution to Problem

According to the inventors' intensive research aimed at solving the above-mentioned problems, in order to disperse a lithium iron phosphate-based positive electrode active material in a slurry for positive electrode film, by specifying the mass ratio of residual double bonds (RDB) calculated from formula (1) in copolymer (A) containing a nitrile group-containing structural unit and a structural unit derived from a conjugated diene, it has been found that the dispersibility of the lithium iron phosphate-based positive electrode active material may be increased in slurries for positive electrode films, thereby suppressing aggregation and precipitation. The positive electrode film obtained by using this slurry for positive electrode film may exhibit excellent electrical conductivity since the lithium iron phosphate-based positive electrode active material is uniformly applied. Furthermore, since the secondary battery provided with this positive electrode film may suppress deterioration of the lithium iron phosphate-based positive electrode active material, oxidation of the copolymer (A), and deterioration of the internal components of the secondary battery even during long-term use and high-temperature storage, excellent life characteristics may be exhibited.

That is, the present invention includes the following embodiments. The embodiment of the present invention is not limited to the following.

<1> A slurry for positive electrode film, comprising a lithium iron phosphate-based positive electrode active material, a dispersant, a binder resin, and a solvent, and the dispersant comprising a copolymer (A), the copolymer (A) having a nitrile group-containing structural unit and a structural unit derived from a conjugated diene in which unsaturated bonds are partially hydrogenated and having a mass ratio of residual double bond (RDB) calculated by the following formula (1) satisfies 0.05 to 5 mass %:

$$\text{RDB (mass \%)} = (BD / (BD + HBD)) \times 100 \quad (1)$$

(in formula (1), BD is a mass ratio of a structural unit derived from a conjugated diene having an unsaturated bond based on a total mass of a structural unit derived from a conjugated diene, and HBD is a mass ratio of a structural unit derived from a conjugated diene in which an unsaturated bond is hydrogenated to a total mass of a structural unit derived from a conjugated diene).

<2> The slurry for positive electrode film according to <1>, wherein the lithium iron phosphate-based positive electrode active material is coated with carbon.

<3> The slurry for positive electrode film according to <1>, wherein the lithium iron phosphate-based positive electrode active material is coated with carbon, and a content of the carbon is 0.1 parts by mass or more and 10 parts by mass or less based on 100 parts by mass of the lithium iron phosphate-based positive electrode active material coated with carbon.

<4> The slurry for positive electrode film according to any one of <1> to <3>, wherein the lithium iron phosphate-based positive electrode active material has a BET specific surface area determined by nitrogen adsorption measurement of 1 $m^2$/g or more and 50 $m^2$/g or less.

<5> The slurry for positive electrode film according to any one of <1> to <4>, wherein a content of a conductive assistant is 0.5 mass % or less with respect to 100 parts by mass of solid content of a slurry for positive electrode film.

<6> The slurry for positive electrode film according to <5>, which does not comprise the conductive assistant.

<7> A slurry for positive electrode film, comprising a lithium iron phosphate-based positive electrode active material, a dispersant, a binder resin, and a solvent, and not comprising a conductive assistant, and the dispersant comprising a copolymer (A), the copolymer (A) having a nitrile group-containing structural unit and a structural unit derived from a conjugated diene in which unsaturated bonds are partially hydrogenated and having a mass ratio of residual double bond (RDB) calculated by the following formula (1) satisfies 0.05 to 10 mass %:

$$\text{RDB (mass \%)} = (BD / (BD + HBD)) \times 100 \quad (1)$$

(in formula (1), BD is a mass ratio of a structural unit derived from a conjugated diene having an unsaturated bond based on a total mass of a structural unit derived from a conjugated diene, and HBD is a mass ratio of a structural unit derived from a conjugated diene in which an unsaturated bond is hydrogenated to a total mass of a structural unit derived from a conjugated diene).

<8> The slurry for positive electrode film according to any one of <1> to <7>, wherein the copolymer (A) has a total content of a nitrile group-containing structural unit and a structural unit derived from a conjugated diene in which unsaturated bonds are partially hydrogenated of 80 mass % or more and 100 mass % or less based on a mass of the copolymer (A).

<9> A positive electrode film, obtained by using the slurry for positive electrode film according to any one of <1> to <8>.

<10> A secondary battery, comprising a positive electrode, a negative electrode, and an electrolyte, the positive electrode comprising a positive electrode film obtained by using the slurry for positive electrode film according to any one of <1> to <8>.

<11> A method for producing a positive electrode film using the slurry for positive electrode film according to any one of <1> to <8>, wherein a step of adding a conductive assistant to the slurry for positive electrode film is not included in a step of forming the positive electrode film using the slurry for positive electrode film.

Effects of Invention

According to one embodiment of the present invention, it is possible to provide a slurry for positive electrode film with excellent storage stability, a positive electrode film with excellent conductivity and oxidation resistance along with a method for producing the same, and a secondary battery with high safety and excellent lifecycle characteristics.

BRIEF DESCRIPTION OF DRAWINGS

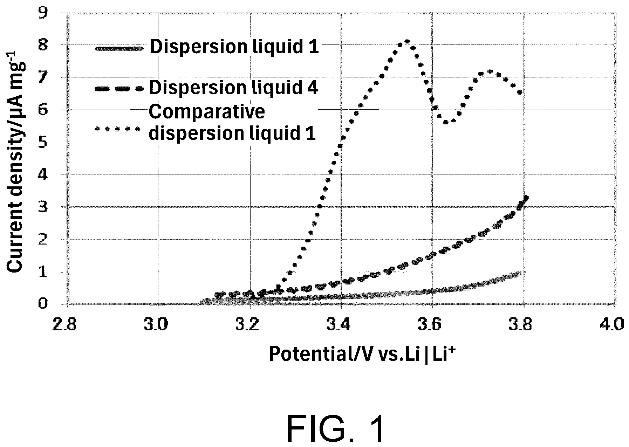

[FIG. 1] is a graph of the oxidation resistance measured for dispersion liquids 1, 4 and comparative dispersion liquid 1.

## DESCRIPTION OF EMBODIMENTS

Hereinafter, the embodiment of the present invention, namely, a slurry for positive electrode film, a positive electrode film, a secondary battery, and a method for producing the foregoing is described in detail. The present invention is not limited to the following embodiments, and the present invention also includes embodiments implemented in a range that does not change the gist of the present invention.

One of the embodiments includes a slurry for positive electrode film, containing a lithium iron phosphate-based positive electrode active material, a dispersant, a binder resin, and a solvent, and the dispersant containing a copolymer (A), the copolymer (A) having a nitrile group-containing structural unit and a structural unit derived from a conjugated diene in which unsaturated bonds are partially hydrogenated and having a mass ratio of residual double bond (RDB) calculated by the following formula (1) satisfies 0.05 to 10 mass %:

$$\text{RDB (mass \%)} = (\text{BD} / (\text{BD} + \text{HBD})) \times 100 \quad (1)$$

(in formula (1), BD is a mass ratio of a structural unit derived from a conjugated diene having an unsaturated bond based on a total mass of a structural unit derived from a conjugated diene, and HBD is a mass ratio of a structural unit derived from a conjugated diene in which an unsaturated bond is hydrogenated to a total mass of a structural unit derived from a conjugated diene).

In one embodiment, in the above-mentioned slurry for positive electrode film, the dispersant has a mass ratio of residual double bond (RDB) calculated by the formula (1) satisfies 0.05 to 5 mass %. In another embodiment, the above-mentioned slurry for positive electrode film contains a lithium iron phosphate-based positive electrode active material, a dispersant, a binder resin, and a solvent, and does not contain a conductive assistant.

In this specification, the hydrogenated nitrile butadiene rubber may be abbreviated as "H-NBR" and N-methyl-2-pyrrolidone may be abbreviated as "NMP."

<Dispersant>

The dispersant contains a copolymer (A), the copolymer (A) having a nitrile group-containing structural unit and a structural unit derived from a conjugated diene in which unsaturated bonds are partially hydrogenated and having a mass ratio of residual double bond (RDB) calculated by the following formula (1) satisfies 0.05 to 10 mass %:

$$\text{RDB (mass \%)} = (\text{BD} / (\text{BD} + \text{HBD})) \times 100 \quad (1)$$

In formula (1), BD is a mass ratio of a structural unit derived from a conjugated diene having an unsaturated bond based on a total mass of a structural unit derived from a conjugated diene, and HBD is a mass ratio of a structural unit derived from a conjugated diene in which an unsaturated bond is hydrogenated to a total mass of a structural unit derived from a conjugated diene.

The mass ratio of residual double bond (RDB) calculated by formula (1) is preferably 10 mass % or less, more preferably 9 mass % or less, and even more preferably 5 mass % or less. In these ranges, the affinity of the copolymer (A) to the solvent increases, the dispersibility and dispersion stability of the lithium iron phosphate-based positive electrode active material improve, and aggregation and precipitation may be suppressed. When the mass ratio of residual double bond (RDB) exceeds the range, the structural units containing the residual double bonds become close to each other, alternatively, the probability of adjacency increases, and the more consecutive structures that form conjugation, the more stable the $\pi$-conjugated orbitals become, making it easier for oxidation reactions to proceed in a chain reaction. When an oxidation reaction occurs, it may result in the swelling of the battery due to the generation of gas, the deterioration of internal battery materials due to the production of corrosive substances such as hydrofluoric acid, or the embrittlement of electrodes due to structural changes in the copolymer (A), all of which may lead to a deterioration in battery performance. Specifically, even when the secondary battery is used for a long period of time or at high temperatures, the copolymer (A) is unlikely to be oxidized, and deterioration of the battery performance may be prevented. Furthermore, in these ranges, since the number of $\pi$-conjugated electrons in copolymer (A) is reduced, the copolymer (A) may act favorably on the lithium iron phosphate-based positive electrode active material that has smaller polarization than a layered or spinel type active material. From the viewpoint of further enhancing the oxidation resistance of the copolymer (A) and the effect on the lithium iron phosphate-based positive electrode active material, the mass ratio of residual double bond (RDB) calculated by formula (1) is preferably 2 mass % or less, more preferably 1 mass % or less, and even more preferably 0.5 mass % or less.

The effect may be obtained when the mass ratio of residual double bond (RDB) calculated by formula (1) is 0.05 mass % or more, and may be, for example, 0.2 mass % or more, or 0.3 mass % or more. Further, another advantage of these ranges is that the copolymer (A) is easily available. For example, the mass ratio of residual double bond (RDB) calculated by formula (1) may be 0.05 to 10 mass %, 0.05 to 9 mass %, 0.05 to 8 mass %, 0.05 to 5 mass %, 0.1 to 4 mass %, 0.2 to 2 mass %, 0.2 to 1 mass %, or 0.3 to 0.5 mass %.

Although having good structure stability, the lithium iron phosphate-based positive electrode active materials have low electrical conductivity. Thus, the surface of the lithium iron phosphate may be coated with a conductive material such as a carbon material to increase the electrical conductivity thereof and then used as a positive electrode active material. Even in such a case, the copolymer (A) is adsorbed to the coated carbon of the surface of the lithium iron phosphate-based positive electrode active material, and the dispersibility thereof may be further increased. The coated carbon on the surface of the lithium iron phosphate-based positive electrode active material is easily adsorbed by the nitrile groups of the copolymer (A), which serve as adsorption sites, and the elasticity of the structural unit derived from a conjugated diene acts as repulsion sites, thereby enhancing the dispersibility and dispersion stability and dispersibility of the material. On the other hand, in addition to the coated carbon on the surface of the active material, when the slurry for positive electrode film contains a carbon material as a conductive assistant, the copolymer (A), which is a dispersant, also acts on the conductive assistant, deteriorating the effect thereof on the lithium iron phosphate-based positive electrode active material and reducing the dispersibility of the lithium iron phosphate-based positive electrode active material. For example, when a carbon material having a large specific surface area is contained as a conductive assistant in the slurry for positive electrode film, the copolymer (A) is more easily adsorbed to the carbon material than to the lithium iron phosphate-based positive electrode active material, thereby causing a deterioration in the dispersibility of the lithium iron phosphate-based positive electrode active material. Specifically, when the carbon material has high crystallinity, the copolymer (A) is more easily adsorbed to the carbon material, and thus the dispersibility of the lithium iron phosphate-based positive electrode active material may be easily deteriorated. From this viewpoint, the slurry for positive electrode film may not contain a conductive assistant, preferably does not contain a carbon material used as a conductive assistant, and more preferably does not contain crystalline carbon. The carbon material used as the conductive assistant is carbon that may be dispersed in a solvent and has a not particularly limited shape, which may be spherical, elliptical, plate-like, flat, scaly, columnar, fibrous, or the like. The conductive assistant may be, for example, carbon black such as acetylene black, furnace black, channel black, Ketjen black, thermal black; carbon nanofiber, carbon nanotube, or the like. Among the above, crystalline carbon such as carbon nanofibers and carbon nanotubes are preferably not included in the slurry for positive electrode film as they tend to cause a deterioration in the dispersibility of the lithium iron phosphate-based positive electrode active material due to the copolymer (A). Furthermore, carbon nanotubes having a large specific surface area tend to cause a deterioration in the dispersibility of the lithium iron phosphate-based positive electrode active material due to the copolymer (A).

From this viewpoint, in the slurry for positive electrode film, the content of carbon material used as the conductive assistant is preferably 30 parts by mass or less, 10 parts by mass or less, or 1 part by mass or less per 100 parts by mass of solid content; and for further reducing the influence on the dispersibility of the lithium iron phosphate-based active material, more preferably 0.5 parts by mass or less, or 0.1 parts by mass or less per 100 parts by mass of solid content; and even more preferably that the slurry for positive electrode film does not substantially contain the conductive assistant. As the conductive assistant, it is particularly preferable that crystalline carbon satisfies these ranges. When two or more types of conductive assistants are contained, it is preferable that the total amount of the two or more types satisfies these ranges.

In this specification, the solid content is the total amount of nonvolatile components other than the solvent in the slurry for positive electrode film, and the solid content includes the lithium iron phosphate-based active material and other active materials, the copolymer (A) and other dispersants, and the binder resin.

In the slurry for positive electrode film, the carbon material used as the conductive assistant is preferably 5 mass % or less, 1 mass % or less, 0.5 mass % or less, or 0.1 mass% or less based on the total amount of the slurry for positive electrode film, and more preferably that the slurry for positive electrode film does not substantially contain the conductive assistant. When two or more types of conductive assistants as the conductive assistant are contained, it is preferable that the total amount of the two or more types satisfies these ranges.

A structural unit derived from a conjugated diene having an unsaturated bond is a structural unit in which a carbon-carbon double bond is present, among a structural unit derived from a conjugated diene. A structural unit derived from a conjugated diene in which an unsaturated bond is hydrogenated is a structural unit which has no carbon-carbon double bond but has a saturated carbon bond among a structural unit derived from a conjugated diene. This structural unit derived from a conjugated diene in which an unsaturated bond is hydrogenated may be formed by hydrogenating a structural unit derived from a conjugated diene. In formula (1), the mass ratio of the structural unit derived from a conjugated diene having an unsaturated bond and the mass ratio of the structural unit derived from a conjugated diene in which an unsaturated bond is hydrogenated to the total mass of the structural unit derived from a conjugated diene may be measured using IR (infrared spectroscopy), respectively. Specifically, they may be measured by the method of Examples.

The copolymer (A) may be obtained by copolymerizing a monomer composition containing a nitrile group-containing monomer and a conjugated diene, and by partially hydrogenating the carbon-carbon double bonds of the structural unit derived from a conjugated diene through hydrogenation. The nitrile group-containing monomer may include, for example, (meth)acrylonitrile. The (meth)acrylonitrile may be acrylonitrile, methacrylonitrile, or a combination thereof. The conjugated diene may be, for example, 1,3-butadiene, 2-methyl-1,3-butadiene (isoprene), 2,3-dimethyl-1,3-butadiene, 2-ethyl-1,3-butadiene, 1,3-pentadiene, etc., and these may be used independently or in combination of two or more.

The copolymer (A) may further contain a structural unit derived from an ethylenically unsaturated monomer other than the nitrile group-containing structural unit and the structural unit derived from a conjugated diene. Other ethylenically unsaturated monomers capable of copolymerizing with the nitrile group-containing monomer and the conjugated diene may be, for example, ethylenically unsaturated carboxylic acids such as (meth)acrylic acid, (anhydrous) maleic acid, fumaric acid, and itaconic acid; mono- or dialkyl esters of the ethylenically unsaturated carboxylic acids such as methyl (meth)acrylate, ethyl (meth)acrylate, butyl (meth)acrylate, 2-ethylhexyl (meth)acrylate, lauryl (meth)acrylate, monomethyl or dimethyl maleic acid, monoethyl or diethyl fumaric acid, mono-n-butyl or di-n-butyl fumaric acid, and mono-n-butyl or di-n-butyl itaconic acid; alkoxyalkyl esters of the ethylenically unsaturated carboxylic acids such as methoxy acrylate, ethoxy acrylate, methoxyethoxyethyl acrylate, and methoxyethoxybutyl acrylate; (meth)acrylates having a hydroxyalkyl group such as 2-hydroxyethyl (meth)acrylate and hydroxypropyl (meth)acrylate; glycidyl (meth)acrylate; (meth)acrylic acid amides and derivatives thereof such as (meth)acrylamide, N-methylol (meth)acrylamide, N-butoxymethyl (meth)acrylamide; acrylates having an amino group such as dimethylaminomethyl acrylate and diethylaminomethyl acrylate; aromatic vinyl monomers such as styrene, α-methylstyrene, vinyltoluene, chlorostyrene; α-olefins such as ethylene and propylene; non-conjugated diene monomers such as dicyclopentadiene and vinylnorbornene, etc. The other ethylenically unsaturated monomers may be used independently or in combination of two or more.

The nitrile group-containing monomer and the conjugated diene may be synthesized by a conventional emulsion polymerization method. The polymerization agent, such as an emulsifier (surfactant), a polymerization initiator, a chelating agent, an oxygen scavenger, and a molecular weight modifier, used for the emulsion polymerization may be a conventionally known agent and is not particularly limited.

As the emulsifier, an anionic emulsifier, a nonionic emulsifier, or the like is usually used, and these may be used in combination. The anionic emulsifier may be, for example, a fatty acid salt such as tallow fatty acid potassium, partially hydrogenated tallow fatty acid potassium, potassium oleate, and sodium oleate; a resin acid salt such as potassium rosinate, sodium rosinate, hydrogenated potassium rosinate and hydrogenated sodium rosinate; an alkylbenzene sulfonate such as sodium dodecylbenzene sulfonate; and the like. The nonionic emulsifier may be, for example, a polyethylene glycol ester emulsifier, a polyethylene glycol ester emulsifier, a pluronic emulsifier such as a block copolymer of ethylene oxide and propylene oxide, and the like. The amount of the emulsifier used may usually be 0.1 to 10 parts by mass based on 100 parts by mass of the monomer composition.

The polymerization initiator may be, for example, a thermally decomposable initiator such as persulfate such as potassium persulfate and ammonium persulfate; an organic peroxide such as t-butyl hydroperoxide, cumene hydroperoxide, diisopropylbenzene hydroperoxide, octanoyl peroxide, 3,5,5-trimethylhexanoyl peroxide; an azo compound such as azobisisobutyro nitrile; a redox initiator consisting of the above initiator and a reducing agent such as divalent iron ion. The amount of the initiator that is used is, for example, in the range of 0.01 to 10 mass % based on the total amount of the monomers.

The molecular weight modifier may be, for example, alkyl mercaptans such as octyl mercaptan, nonyl mercaptan, decyl mercaptan, dodecyl mercaptan, and 3-mercapto-1,2-propanediol, thioglycolic acid esters such as octyl thioglycolate, nonyl thioglycolate, and 2-ethylhexyl thioglycolate, 2,4-diphenyl-4-methyl-1-pentene, 1-methyl-4-isopropylidene-1-cyclohexene, α-pinene, β-pinene, and the like. The amount of the molecular weight modifier that is used is, for example, in the range of 0.01 to 10 mass % based on the total amount of the monomers.

The emulsion polymerization reaction may be either a continuous type or a batch type, and the polymerization temperature may be any of a low temperature to a high temperature, and is preferably 0°C to 70°C, more preferably 0°C to 50°C. In addition, the method of adding the monomer (collective addition, divided addition, and the like), the polymerization time, the polymerization conversion rate and the like are not particularly limited.

Next, a copolymer of a monomer composition containing a nitrile group-containing monomer and a conjugated diene is hydrogenated, so that a copolymer (A) containing a nitrile group-containing structural unit and a structural unit derived from a conjugated diene in which unsaturated bonds are partially hydrogenated may be obtained. The hydrogenation step may be carried out by conventional methods.

The hydrogenation is preferably carried out by a method capable of selectively hydrogenating a structural unit derived from a conjugated diene, and examples thereof include an oil layer hydrogenation method and an aqueous layer hydrogenation method. The aqueous layer hydrogenation method is preferred because the resulting copolymer (A) contains a small amount of impurities (e.g., a coagulant or metals, which is described later). The hydrogenation is preferably carried out using a hydrogenation catalyst. The hydrogenation catalyst may be any known selective hydrogenation catalyst and is not particularly limited, for example, for palladium catalysts, palladium salts of carboxylic acids such as formic acid, acetic acid, propionic acid, lauric acid, succinic acid, oleic acid, phthalic acid; palladium chlorides such as palladium chloride, dichloro(cyclooctadiene)palladium, dichloro(norbornadiene)palladium, ammonium hexachloropalladate(IV); iodides such as palladium iodide; palladium sulfate dihydrate, and the like. The hydrogenation step may be carried out in one stage, but is preferably carried out in two or more stages. By carrying out the hydrogenation in two or more stages, the hydrogenation rate may be further increased.

After completion of the hydrogenation reaction, it is preferable to remove the hydrogenation catalyst from the reaction product. As a method therefor, for example, a method may be adopted in which an adsorbent such as activated carbon or ion exchange resin is added to adsorb the hydrogenation catalyst under stirring, and then the reaction product is filtered or centrifuged. The hydrogenation catalyst may be left in the reaction product without being removed, and the hydrogenation catalyst may remain in the slurry for positive electrode film.

The content of the nitrile group-containing structural unit is preferably 15 mass % or more, more preferably 20 mass % or more, and even more preferably 30 mass % or more based on the mass of the copolymer (A) (i.e., when the mass of the copolymer (A) is 100 mass %). The content of the nitrile group-containing structural unit is preferably 60 mass % or less, more preferably 50 mass % or less, and even more preferably 40 mass % or less based on the mass of the copolymer (A) (i.e., when the mass of the copolymer (A) is 100 mass %). By setting the content of the nitrile group-containing structural unit within these ranges, the adsorption to the dispersed substance and the affinity to the solvent may be controlled, and the dispersed substance may exist more stably in the solvent. Further, the affinity of the copolymer (A) to the electrolyte may be more precisely controlled, and problems such as the copolymer (A) dissolving in the electrolyte inside the battery and increasing the resistance of the electrolyte may be prevented. Furthermore, by setting the strongly polarized nitrile group to the above range, the dielectric constant of the copolymer (A) may be adjusted to an appropriate range, and the affinity with respect to the lithium iron phosphate-based positive electrode active material, which has a smaller polarization than a layered or spinel type active material, may be increased.

For example, the content of the nitrile group-containing structural unit may be 15 mass % or more and 60 mass % or less, 20 mass % or more and 50 mass % or less, and 30 mass % or more and 40 mass % or less based on the mass of the copolymer (A) (i.e., when the mass of the copolymer (A) is 100 mass %).

The content of the structural unit derived from a conjugated diene is preferably 40 mass % or more, more preferably 50 mass % or more, and even more preferably 60 mass % or more based on the mass of the copolymer (A) (i.e., when the mass of the copolymer (A) is 100 mass %). The content of the structural unit derived from a conjugated diene is preferably less than 85 mass %, more preferably 75 mass % or less, and even more preferably 70 mass % or less based on the mass of the copolymer (A) (i.e., when the mass of the copolymer I is 100 mass %). By setting the content of the structural unit derived from a conjugated diene within these ranges, a sterically-hindered part that prevents aggregation of the dispersed substances may be formed, and the dispersed substances may be stably present in the solvent.

For example, the content of the structural unit derived from a conjugated diene may be 40 mass % or more and less than 85 mass %, 50 mass % or more and 75 mass % or less, and 60 mass % or more and 70 mass % or less based on the mass of the copolymer (A) (i.e., when the mass of the copolymer (A) is 100 mass %).

Preferred embodiments of the copolymer (A) include the following.

- A copolymer (A) in which the total content of a structural unit derived from a conjugated diene and a nitrile group-containing structural unit contained in the copolymer (A) is 80 mass % or more and 100 mass % or less based on the mass of the copolymer (A). The total content is preferably 90 mass % or more, more preferably 95 mass % or more, and even more preferably 98 mass % or more.
- A copolymer (A) in which the total content of the structural unit derived from a conjugated diene, the nitrile group-containing structural unit, and the amide group-containing unit contained in the copolymer (A) is 80 mass % or more and 100 mass % or less based on the mass of the copolymer (A). The total content is preferably 90 mass % or more, more preferably 95 mass % or more, and even more preferably 98 mass % or more.
- A copolymer (A) in which the total content of the structural unit derived from a conjugated diene, the nitrile group-containing structural unit, the amide group-containing structural unit, and the carboxy group-containing structural unit contained in the copolymer (A) is 80 mass % or more and 100 mass % or less based on the mass of the copolymer (A). The total content is preferably 90 mass % or more, more preferably 95 mass % or more, and even more preferably 98 mass % or more.

In this specification, the content of the structural unit in the copolymer (A) may be determined by utilizing the amount of monomer used, NMR (nuclear magnetic resonance) measurement, and/or IR (infrared spectroscopy) measurement.

The weight average molecular weight of the copolymer (A) is preferably 5,000 or more, more preferably 10,000 or more, and even more preferably 50,000 or more. The weight average molecular weight of the copolymer (A) is preferably 400,000 or less, more preferably 350,000 or less, and even more preferably 300,000 or less. When the weight average molecular weight of the copolymer (A) is 5,000 or more and 400,000 or less, the adsorption to the dispersed material and the affinity to the solvent become good, and the stability of the slurry for positive electrode film tends to be improved. The weight average molecular weight is a weight average molecular weight calculated in terms of polystyrene, and may be measured by gel permeation chromatography (GPC). Specifically, the measurement may be performed by the method described in Examples.

It is preferred that the Mooney viscosity ($ML_{1+4}$, 100°C) of the copolymer (A) be between 20 and 100. Here, the term "Mooney viscosity ($ML_{1+4}$, 100°C)" refers to a measurement that may be conducted at a temperature of 100°C in accordance with JISK6300-1.

The Mooney viscosity of the copolymer (A) is preferably 20 or more and 100 or less, more preferably 70 or less, more preferably 55 or less, and even more preferably 50 or less. When the Mooney viscosity of the copolymer (A) is within these ranges, the dispersibility of the dispersed material may be further improved. Further, by suppressing the increase in viscosity of the resulting slurry for positive electrode film, it is now possible to efficiently remove metal foreign matter that comes from raw materials through methods such as iron removal using a magnet, filtration, and centrifugal separation, and it is possible to prevent the deterioration of battery performance caused by the residual metal foreign matter.

The method for adjusting the Mooney viscosity of the copolymer (A) is not particularly limited, however, for example, the Mooney viscosity may be adjusted by changing the composition (e.g., structural unit type and content, hydrogenation rate), structure (e.g., straight chain ratio), molecular weight, preparation conditions (e.g., polymerization temperature, amount of molecular weight modifier), etc. of the copolymer (A).

The dispersant contains at least the copolymer (A). The dispersant may further include any high molecular weight dispersant, any low molecular weight dispersant, etc., within a range that does not impair the effects of the present invention. The content of the copolymer (A) in the dispersant is preferably 50 mass % or more, more preferably 80 mass % or more, and even more preferably 90 mass % or more. The content of the copolymer (A) in the dispersant may be 100 mass %, in which case the dispersant consists only of the copolymer (A).

The slurry for positive electrode film may further contain a base. When the slurry for positive electrode film contains a base, the slurry for positive electrode film exhibits basicity, and the dispersibility of the lithium iron phosphate-based positive electrode active material may be further increased. The base may be contained in the slurry for positive electrode film as a dispersant composition containing the copolymer (A) and a base. The initial dispersibility may be further improved by preparing a dispersant composition containing the copolymer (A) and a base and then mixing a lithium iron phosphate-based active material and a binder resin. By including a base in the slurry for positive electrode film, the microscopic dispersibility is increased, and the lithium iron phosphate-based positive electrode active material is more uniformly applied in the positive electrode film, thereby making further improving the battery performance. As the base, at least one selected from the group consisting of inorganic bases and organic hydroxides (organic bases) may be used.

The inorganic base may be, for example, chlorides, hydroxides, carbonates, nitrates, sulfates, phosphates, tungstates, vanadates, molybdates, niobates, or borates of alkali metals or alkaline earth metals; ammonium hydroxide, and the like. Among the above, from the viewpoint of easily supplying cations, metal bases are preferred, and hydroxides of alkali metals or alkaline earth metals are more preferred. The alkali metal hydroxide may be, for example, lithium hydroxide, sodium hydroxide, potassium hydroxide, and the like. The hydroxides of alkaline earth metals may be, for example, calcium hydroxide, magnesium hydroxide, and the like. Among the above, it is more preferable to use at least one selected from the group consisting of lithium hydroxide, sodium hydroxide, and potassium hydroxide. The metal contained in the inorganic base may be a transition metal.

An organic hydroxide is a salt including an organic cation and a hydroxide ion. The organic hydroxide may be, for example, trimethyl-2-hydroxyethylammonium hydroxide, tetramethylammonium hydroxide, cetyltrimethylammonium hydroxide, hexadecyltrimethylammonium hydroxide, trimethylphenylammonium hydroxide, 3-trifluoromethyl-phenyltrimethylammonium hydroxide, benzyltrimethylammonium hydroxide, and the like. Among the above, it is particularly preferable to use at least one hydroxide selected from the group consisting of trimethyl-2-hydroxyethylammonium hydroxide and tetramethylammonium hydroxide.

From the viewpoint of improving dispersibility due to the basicity of the slurry for positive electrode film, the amount of the base used is preferably 1 part by mass or more, and more preferably 3 parts by mass or more based on 100 parts by mass of the copolymer (A). From the viewpoint of preventing corrosion of the dispersion device, corrosion inside the battery, and the like, the amount of the base used is preferably 20 parts by mass or less, more preferably 15 parts by mass or less, and even more preferably 10 parts by mass or less based on 100 parts by mass of the copolymer (A). For example, the amount of the base used may be 1 to 20 parts by mass, 3 to 15 parts by mass, or 3 to 10 parts by mass based on 100 parts by mass of the copolymer (A).

<Lithium iron phosphate-based positive electrode active material>

The slurry for positive electrode film contains a lithium iron phosphate (LFP)-based positive electrode active material.

The lithium iron phosphate-based positive electrode active material preferably contains a lithium iron phosphate compound having an olivine structure, and more preferably contains a compound represented by the general formula $Li_xFe_y(PO_4)_z$ ($0.95 \leqq x, z \leqq 1.05$ for $y=1.0$). More preferably, it is a compound represented by $0.97 \leqq x$ and $z \leqq 1.03$ for

y=1.0, and even more preferably, it is a compound represented by $0.99 \leqq x$ and $z \leqq 1.01$ for y=1.0. Here, x, y, and z are determined by decomposing a lithium iron phosphate compound having an olivine structure into each ion component, and then measuring the components by ICP (inductively coupled plasma) emission spectrometry.

In the general formula $Li_xFe_y(PO_4)_z$, when x and z are less than 0.95 or more than 1.05 for y=1.0, since there is a high possibility that it contains impurities other than lithium iron phosphate compounds having an olivine structure, and the content of the lithium iron phosphate compound having an olivine structure per unit mass in the positive electrode active material for the lithium secondary battery becomes small, it may be difficult to obtain good battery performance. When x and/or z are less than 0.95 for y=1.0, impurities that may be generated include $Fe_7(PO_4)_6$, $Fe_2P_2O_7$, $Fe_2P$, $Fe_2O_3$, Fe, and the like, and when x and/or z exceed 1.05 for y=1.0, impurities that may be generated include $Li_3PO_4$, $Fe_3(P2O_7)_2$, and the like.

The crystallite diameter of the lithium iron phosphate compound having an olivine structure is preferably 30 nm or more and less than 400 nm, more preferably 40 nm or more and less than 300 nm, and even more preferably 60 nm or more and less than 250 nm. However, the crystallite diameter of the lithium iron phosphate compound having an olivine structure is determined by using the half-value width (B) and the diffraction angle (20) of the diffraction peak of the (111) plane in the powder X-ray diffraction pattern measured using an X-ray diffractometer and is calculated using the Debye-Scherrer equation.

When the crystallite diameter of the lithium iron phosphate compound having an olivine structure is less than 30 nm, the productivity may decrease when preparing the lithium iron phosphate-based positive electrode active material and the positive electrode, and interfaces between crystallites may occur inside the primary particles, deteriorating the efficiency of lithium ion transfer, resulting in a reduction in discharge capacity. On the other hand, when the crystallite diameter exceeds 400 nm, or even 300 nm, the moving distance of lithium ions and electrons inside the crystal increases, and the discharge capacity and charge/discharge characteristics under high load may be deteriorated.

Here, the Debye-Scherrer equation, which is a method for calculating the crystallite diameter, is described. The spread of the half-value width ($\beta$) for an ideal single crystal is expressed by formula (a1), where BL is the half-value width of a diffraction peak in a powder X-ray diffraction pattern of a sample, and BR is the half-value width of a diffraction peak in an X-ray diffraction pattern of an ideal single crystal.

$$\beta = BL\text{-}BR......(a1)$$

In this case, the crystallite diameter d is expressed by formula (a2) using the spread of the half-value width ($\beta$) of the diffraction peak and the diffraction angle (20) for an ideal single crystal.

$$d=0.9 \cdot \lambda/(\beta\cos\theta)......(a2)$$

Since the lithium iron phosphate-based positive electrode active material has poor electrical conductivity when it is made only of a lithium iron phosphate compound having an olivine structure, it is preferable to impart electrical conductivity by coating the surface of the primary particle with carbon. The coated carbon may cover the surface of the lithium iron phosphate compound entirely or partially. Further, "coated carbon" means a state in which the lithium iron phosphate compound is in contact with a carbon coating layer, and "coated carbon" means carbon coating a lithium iron phosphate compound with carbon. The state of carbon coating on the surface of the primary particle may be confirmed by observation with a TEM (transmission electron microscope).

From the viewpoint of conductivity, the carbon-coated lithium iron phosphate positive electrode active material has a coated carbon content (carbon content) of preferably 0.1 mass % or more, more preferably 0.5 mass % or more, even more preferably 1.0 mass % or more, and even more preferably 1.8 mass % or more for one layer based on 100 mass % of the lithium iron phosphate-based positive electrode active material containing coated carbon.

In addition, in order to increase the content of lithium iron phosphate compound having an olivine structure in the positive electrode, the carbon content of the carbon-coated lithium iron phosphate-based positive electrode active material is preferably 10 mass % or less, more preferably 8 mass % or less, even more preferably 6 mass % or less, and even more preferably 5.0 mass % or less for one layer based on 100 mass % of the lithium iron phosphate-based positive electrode active material containing coated carbon. However, the carbon content is determined by a combustion method using a CHN elemental analyzer. When the content of the lithium iron phosphate compound having an olivine structure in the positive electrode decreases, the content of the lithium ions involved in charging and discharging also decreases, thereby reducing the discharge capacity per unit mass or volume of the battery, making it difficult to be used as a highly practical battery. Further, when the carbon content exceeds the above range, the reactivity between lithium ions and the lithium iron phosphate-based positive electrode active material may be deteriorated. For example, the carbon-coated lithium iron phosphate-based positive electrode active material has a coated carbon content (carbon content) of 0.1 to 8 mass%, 0.1 to 7 mass %, 0.5 to 6 mass %, 1.0 to 5.0 mass%, 1.8 to 4.5 mass %, or 2 to 4 mass % based on 100 mass % of the lithium iron phosphate-based positive electrode active material containing coated carbon.

A preferred carbon content of carbon coated on the surface of the lithium iron phosphate compound particles having an olivine structure varies depending on the crystallite diameter and particle diameter of the lithium iron phosphate compound particles having an olivine structure, and from the viewpoint of battery performance, when the amount is too small or too large, it may lead to a performance deterioration.

The lithium iron phosphate-based positive electrode active material preferably has a BET specific surface area of $1 \, m^2/g$ or more and $50 \, m^2/g$ or less. It is preferably $5 \, m^2/g$ or more, and more preferably $8 \, m^2/g$ or more. Also, it is preferably $45 \, m^2/g$ or less, and more preferably $40 \, m^2/g$ or less.

Further, the lithium iron phosphate-based positive electrode active material preferably has a pore volume of 0.01 $cm^3/g$ or more and $0.40 \, cm^3/g$ or less. Preferably, it is $0.05 \, cm^3/g$ or more and $0.30 \, cm^3/g$ or less, and more preferably 0.10 $cm^3/g$ or more and $0.20 \, cm^3/g$ or less.

Here, the BET specific surface area and the pore volume are determined by nitrogen adsorption measurement using a gas adsorption amount measuring device. The pore volume is determined by using the BJH method as the analytical method.

When the BET specific surface area of the lithium iron phosphate-based positive electrode active material is less than 1 $m^2/g$ or even less than $5 \, m^2/g$, or when the pore volume is less than $0.01 \, cm^3/g$ or even less than $0.05 \, cm^3/g$, since the intercalation and deintercalation of the lithium ion on the surface of the active material is limited, the rate of the battery reaction is deteriorated, which may result in a long charging time or inability to obtain a practically sufficient output. On the other hand, when the BET specific surface area exceeds $50 \, m^2/g$ or the pore volume exceeds $0.40 \, cm^3/g$, since the primary particle diameter becomes very small, dispersion control in the preparing process of the slurry for positive electrode film and uniform coating control in the positive electrode film coating process are becoming difficult, and it may also be difficult to fill the positive electrode with high density of positive electrode active material for lithium secondary batteries, rendering it impractical for use. Furthermore, it may lead to a deterioration in productivity. Specifically, when the BET specific surface area and the pore volume of the lithium iron phosphate-based positive electrode active material are within the above range, by the action of the copolymer (A), the particles and crystals of the active material, the carbon coating of the surface, and the like may be dispersed well without being damaged, and this is advantageous for reducing the resistance of the secondary battery and extending the life thereof.

The lithium iron phosphate-based positive electrode active material preferably has an average primary particle diameter of 40 nm or more and 500 nm or less. It is preferably 50 nm or more and 400 nm or less, and more preferably 60 nm or more and 300 nm or less. The average primary particle diameter is determined by directly observing the particles with a scanning electron microscope (SEM), measuring the size (maximum diameter) of the primary particles, and averaging the measured values.

When the average primary particle diameter is less than 50 nm, since the specific surface area increases, dispersion control and stable coating control become difficult when preparing the slurry for positive electrode film, which not only makes it difficult to obtain a high-density positive electrode, but may also lead to a deterioration in productivity. On the other hand, when the average primary particle diameter exceeds 500 nm, or even 400 nm, the reaction area on the surface of the active material where the lithium ion intercalation and deintercalation reaction occurs decreases, and the discharge capacity and charge/discharge characteristics under high load may be deteriorated.

<Method for producing positive electrode active material for lithium secondary battery>

The method for producing the lithium iron phosphate-based positive electrode active material includes, for example, a step of mixing a crystalline $\alpha$-$FePO_4$, a lithium-containing compound, and a carbon-containing substance that generates conductive carbon by thermal decomposition to form a mixture and a step of firing and reacting the mixture to produce a lithium iron phosphate compound having an olivine structure whose surface is partially or entirely coated with carbon.

In the method for producing the lithium iron phosphate-based positive electrode active material, in the step of mixing a crystalline $\alpha$-$FePO_4$, a lithium-containing compound, and a carbon-containing substance that generates conductive carbon by thermal decomposition to form a mixture, the crystalline $\alpha$-$FePO_4$ and lithium-containing compound are weighed so that the elemental ratio of iron and lithium is 1:1, the carbon-containing substance that generates conductive carbon by thermal decomposition is weighed according to the carbon content produced after the firing reaction, and the three components are mixed. The mixing method may be either a dry process or a wet process.

In the method for producing the lithium iron phosphate-based positive electrode active material, the heating temperature in the firing step varies depending on the lithium-containing compound and the carbon-containing substance that generates conductive carbon by thermal decomposition, and the temperature is desirably 300 to 900°C, preferably 450 to 800°C. The firing atmosphere is preferably an inert gas atmosphere such as nitrogen or argon, or a reducing gas atmosphere containing hydrogen.

The crystalline $\alpha$-$FePO_4$ used in the method for producing the lithium iron phosphate-based positive electrode active material may be prepared, for example, by the following method. First, an aqueous solution of ammonium dihydrogen phosphate and an aqueous solution of iron (III) chloride are slowly mixed to cause particle precipitation, and by filtering, washing with water, and drying the reaction solution, amorphous $FePO_4 \cdot nH_2O$ is obtained. In this case, it is also preferable to use a weak base such as ammonia or an organic amine as a neutralizer for hydrochloric acid generated as a by-product in the reaction solution.

The obtained amorphous $FePO_4 \cdot nH_2O$ is then heated and fired to remove the hydrates and cause a crystal transition to produce the crystalline $\alpha$-$FePO_4$. In this case, the reactivity may be changed by changing the heating temperature and the firing atmosphere, and the average primary particle diameter and BET specific surface area of the crystalline $\alpha$-$FePO_4$ may be controlled. Specifically, the heating temperature is preferably 400 to 700°C, more preferably 450 to 600°C. The firing atmosphere is not particularly limited, but is preferably an inert gas atmosphere such as nitrogen or argon, or a reducing gas atmosphere containing hydrogen, or the like.

Furthermore, it is also preferable to use the crystalline $\alpha$-$FePO_4$ after pulverizing the same using a dry pulverizer, a wet pulverizer, or the like. By pulverization, it is possible to control the crystallite diameter, average primary particle diameter, secondary particle diameter, and the like to be smaller than those immediately after the crystal transition. The dry pulverizer may be a mill, a mixer mill, a cutter mill, a jet mill, a grinder (mass colloider), or the like, and the wet pulverizer may be a mixer, a homogenizer, a media disperser, a wet jet mill, a roll mill, a kneader, or the like.

The lithium-containing compound used in the method for producing the lithium iron phosphate-based positive electrode active material may be any compound containing lithium. However, from the viewpoint of storage stability, ease of handling, and the like, oxides, hydroxides, chlorides, carbonates, phosphates, and organic acid salts such as acetates are preferred.

The carbon-containing substance that generates conductive carbon by thermal decomposition used in the method for producing the lithium iron phosphate-based positive electrode active material is not particularly limited, and any substance containing carbon may be used. Further, a carbon-containing substance that melts or softens at 250°C or less is preferable, and a carbon-containing substance that melts or softens at 200°C or less is more preferable.

In the firing step in the method for producing the lithium iron phosphate-based positive electrode active material, by melting or softening the carbon-containing substance in a temperature range of 250°C or lower, where the lithium iron phosphate compound having an olivine structure is difficult to form, raw material particles such as the crystalline $\alpha$-$FePO_4$ and lithium-containing compounds may be coated. By further heating and reacting the raw material particles coated with a carbon-containing substance, a lithium iron phosphate compound having a uniformly carbon-coated olivine structure is easily obtained. Further, the lithium iron phosphate compound having an olivine structure coated with a carbon-containing compound before formation may suppress the disordered particle growth and fusion behavior between particles of the formed lithium iron phosphate compound having an olivine structure.

The carbon-containing substance that generates conductive carbon by thermal decomposition may be, specifically, bitumens, sugars, thermoplastic resins, aliphatic hydrocarbons, aliphatic alcohols, aliphatic carboxylic acids, alicyclic hydrocarbons, alicyclic alcohols, alicyclic carboxylic acids, natural materials such as natural wax, natural resin, and vegetable oil, and the like. The carbon-containing substance may be used in combination of two or more kinds of carbon-containing substances. The carbon-containing substance may also be used by dissolving or dispersing the same in a medium such as a solvent or water.

Particularly, from the viewpoints of ease of handling, cost, carbon residual rate after firing step, carbon coverage, etc., the carbon-containing substance that generates conductive carbon by thermal decomposition may be, preferably bitumens, natural waxes, natural resins, thermoplastic resins synthesized by addition polymerization, alcohols and carboxylic acids having 10 or more carbon atoms, hydrocarbons having 15 or more carbon atoms, natural waxes, and the like.

The lithium iron phosphate-based positive electrode active material is not particularly limited, but may be synthesized by the method described in, for example, JP-A-2012-146639.

<Binder resin>

The binder resin is a resin capable of binding materials such as the positive electrode active material together. In this specification, the binder resin is different from the copolymer (A). That is, the binder resin is selected from the resins excluding the copolymer (A). The binder resin may be, for example, a homopolymer or copolymer containing ethylene, propylene, vinyl chloride, vinyl acetate, vinyl alcohol, maleic acid, acrylic acid, acrylic esters, methacrylic acid, methacrylic esters, acrylonitrile, styrene, etc. as structural units, vinyl butyral, vinyl acetal, vinyl pyrrolidone, etc. as a structural unit; resins such as polyurethane resin, polyester resin, phenol resin, epoxy resin, phenoxy resin, urea resin, melamine resin, alkyd resin, acrylic resin, formaldehyde resin, silicone resin, fluorine resin; cellulose resins such as carboxymethyl cellulose; rubbers such as styrene-butadiene rubber and fluororubber; conductive resins such as polyaniline and polyacetylene, and the like. Further, modified products, mixtures, or copolymers thereof may also be used.

The weight average molecular weight of the binder resin is preferably from 10,000 to 5,000,000, more preferably from 100,000 to 3,000,000, and even more preferably from 200,000 to 1,500,000.

<Fluororesin>

The binder resin contained in the slurry for positive electrode film is preferably a fluororesin. Fluorine resin is a resin containing fluorine atoms, has excellent heat resistance, chemical resistance and adhesiveness, and functions as a binder resin. The fluororesin may have a structure in which hydrogen atoms of polyethylene are substituted with fluorine or trifluoromethyl. The fluororesin may be, for example, a homopolymer such as polytetrafluoroethylene (PTFE), polyvinyl fluoride (PVF), polyvinylidene fluoride (PVDF), and polychlorotrifluoroethylene (PCTFE); a copolymer such as perfluoroalkoxyalkane (PFA), perfluoroethylene propene copolymer (FEP), ethylene-tetrafluoroethylene copolymer (ETFE), ethylene-chlorotrifluoroethylene copolymer (ECTFE), tetrafluoroethylene-perfluorodioxysole copolymer (TPE/PDD), or a homopolymer thereof, and the like. These may be used independently or in combination of two or more. Among the fluororesins, preferred are polytetrafluoroethylene (PTFE), polyvinyl fluoride (PVF), polyvinylidene fluoride (PVdF), resins having structural units thereof, modified products thereof, or combinations thereof from the viewpoint of durability. Among the above, the polyvinylidene fluoride resin is preferred, and examples thereof include a homopolymer of polyvinylidene fluoride; a copolymer of vinylidene fluoride with hexafluoropropylene, tetrafluoroethylene, etc.; and the like. The polyvinylidene fluoride resin may be modified, for example, by introducing an acidic group such as a carboxyl group. The fluororesin may be used independently or in combination of two or more.

In order to maintain a good balance between resistance, adhesion, and resin viscosity, the weight average molecular weight (Mw) of the fluororesin is preferably 1,000,000 to 5,000,000, more preferably 200,000 to 3,000,000, and even more preferably 500,000 to 1,500,000. From the viewpoint of film-forming properties of the positive electrode film, the glass transition point of the fluororesin is preferably 20°C or lower, more preferably 10°C or lower, and even more preferably 0°C or lower.

Commercially available products of polyvinylidene fluoride and modified products thereof include, for example, KF Polymer series, manufactured by Kureha Co., Ltd., "W#7300, W#7200, W#1700, W#1300, W#1100, W#9700, W#9300, W#9100, L#7305, L#7208, L#1710, L#1320, L#1120", ad solef series, manufactured by Solvay, "6008, 6010, 6012, 1015, 6020, 5130, 9007, 460, 41308, 11010, 21510, 31508, 60512", and the like (all trade names).

<Solvent>

The slurry for positive electrode film contains a solvent. The solvent is not particularly limited, but is preferably a solvent capable of dissolving the copolymer (A), or a solvent consisting of any one of water-soluble organic solvents, or a mixed solvent consisting of two or more of water-soluble organic solvents.

The water-soluble organic solvent used may be an amide solvent (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.), a heterocyclic system solvent (cyclohexylpyrrolidone, 2-oxazolidone, 1,3-dimethyl-2-imidazolidinone, γ-butyrolactone, etc.), a sulfoxide type solvent (dimethyl sulfoxide etc.), a sulfone solvent (hexamethylphosphorotriamide, sulfolane, etc.), a lower ketone solvent (acetone, methyl ethyl ketone, etc.), and other solvents including tetrahydrofuran, urea, acetonitrile, etc. The water-soluble organic solvent preferably contains an amide-based organic solvent, and more preferably contains at least one selected from the group consisting of N-methyl-2-pyrrolidone and N-ethyl-2-pyrrolidone.

The content of the copolymer (A) in the slurry for positive electrode film is preferably 0.01 to 10 mass %, more preferably 0.05 to 5 mass % based on the mass of the positive electrode active material (that is, taking the mass of the positive electrode active material as 100 mass %).

The content of the binder resin in the slurry for positive electrode film is preferably 0.1 to 30 mass %, more preferably 0.5 to 20 mass %, and even more preferably 1 to 10 mass % based on the mass of the positive electrode active material (that is, taking the mass of the positive electrode active material as 100 mass %). Here, although the positive electrode active material is preferably a lithium iron phosphate-based positive electrode active material, when used in combination with other positive electrode active materials, in the case where the total amount of the two or more positive electrode active materials is 100 mass %, it is preferable that the contents of the copolymer (A) and the binder resin are each within the above ranges.

The solid content in the slurry for positive electrode film is preferably 30 to 90 mass %, more preferably 30 to 80 mass %, and even more preferably 40 to 75 mass % based on the mass of the slurry for positive electrode film (that is, taking the mass of the slurry for positive electrode film as 100 mass %).

The slurry for positive electrode film may further contain other optional ingredients such as amine compounds, inorganic bases, wetting agents, antifoaming agents, surfactants, pH adjusters, wetting and penetrating agents, antioxidants, preservatives, antifungal agents, leveling agents, and the like, if necessary.

<Method for producing slurry for positive electrode film>

The slurry for positive electrode film may be produced by adding and mixing the lithium iron phosphate-based positive electrode active material, the copolymer (A), the binder resin, and the solvent all at once or in portions. It is preferable that the copolymer (A) is mixed with a solvent to obtain a dispersant-containing liquid, and the dispersant-containing liquid is added to the slurry for positive electrode film. The content of the copolymer (A) is preferably from 1 to 20 mass %, more preferably from 5 to 15 mass % based on the total mass of the dispersant-containing liquid. It is preferable that the binder resin is mixed with a solvent to obtain a binder resin-containing liquid, and the binder resin-containing liquid is added to the slurry for positive electrode film. The content of the binder resin is preferably from 1 to 40 mass %, and more preferably from 3 to 20 mass % based on the total mass of the binder-containing liquid.

When adding a base to the slurry for positive electrode film, it is preferable to add the base to the dispersant-containing liquid and then add the binder resin-containing liquid. As for the base, it is preferable to add a base-containing liquid containing a base and a solvent to the dispersant-containing liquid. The content of the base in the base-containing liquid is preferably 1 to 30 mass %, more preferably 10 to 20 mass %.

In the method for producing the slurry for positive electrode film, the method of mixing each component may be, for example, a method using various dispersion devices such as a disperser, a homogenizer, a Silverson mixer, a kneader, a two-roll mill, a three-roll mill, a ball mill, a horizontal sand mill, a vertical sand mill, an annular bead mill, a high-pressure homogenizer, an attritor, a planetary mixer, or a high-pressure homogenizer.

<Positive electrode film>

A positive electrode film according to one embodiment is a positive electrode film obtained by using a slurry for positive electrode film, and the details of the slurry for positive electrode film are as described above. That is, the positive electrode film contains a lithium iron phosphate-based positive electrode active material, a copolymer (A), and a binder resin. As an example of a method for producing a positive electrode film, a slurry for positive electrode film is applied to a current collector and then dried.

In the positive electrode film, the amount of the conductive assistant is preferably 5 mass % or less, 1 mass % or less, 0.5 mass % or less, or 0.1 mass % or less based on the total mass of the positive electrode film, and it is preferable that it does not contain the conductive assistant. In the method for producing a positive electrode film, the step of forming a positive electrode film using a slurry for positive electrode film preferably does not include a step of adding a conductive assistant to the slurry for positive electrode film. In this case, it is more preferable that the slurry for positive electrode film does not contain a conductive assistant as a conductive material. The details of the conductive assistant are as described above.

The material and shape of the current collector are not particularly limited, and may be appropriately selected according to the type of secondary battery. For example, the material of the current collector may be a metal or an alloy such as aluminum, copper, nickel, titanium, or stainless steel. As for the shape, a flat foil is generally used, but a current collector with a roughened surface, a perforated foil current collector, or a mesh current collector may also be used.

The method for applying the slurry for positive electrode film to the current collector is not particularly limited, and any known method may be used. Specifically, the die coating method, the dip coating method, the roll coating method, the doctor coating method, the knife coating method, the spray coating method, the gravure coating method, the screen printing method, the electrostatic coating method, and the like may be used. The drying method may be, but are not limited to, drying by leaving out, or drying using a blower dryer, a warm air dryer, an infrared heater, a far-infrared heater, or the like.

After coating, rolling treatment may be carried out using a lithographic press, a calendar roll and the like. The thickness of the formed film is, for example, $1 \mu m$ or more and $500 \mu m$ or less, and preferably $10 \mu m$ or more and $300 \mu m$ or less.

<Secondary battery>

A secondary battery according to one embodiment includes a positive electrode, a negative electrode, and an electrolyte, where the positive electrode is a secondary battery including a positive electrode film obtained using a slurry for positive electrode film, and the details of the slurry for positive electrode film are as described above.

The positive electrode includes, for example, a current collector and a positive electrode film formed on the current collector. The positive electrode may be formed, for example, by applying a slurry for positive electrode film to a current collector and drying the applied film. That is, the positive electrode film contains a lithium iron phosphate-based positive electrode active material, a copolymer (A), and a binder resin. The details are as described above.

The negative electrode includes, for example, a current collector and a negative electrode film formed on the current collector. The negative electrode film may be formed, for example, by applying a slurry for negative electrode films to a current collector and drying the applied film. The same current collector as described above for the positive electrode may be used as the current collector for the negative electrode. The slurry for negative electrode films is not particularly limited, but may contain, for example, a negative electrode active material, a binder resin, and a solvent. A material capable of reversibly doping or intercalating lithium ions may be used as the negative electrode active material. For example, metallic Li and an alloy of Li such as tin alloy, silicon alloy, lead alloy; a metal oxide such as $Li_xFe_2O_3$, $Li_xFe_3O_4$, $Li_xWO_2$ (x is a number of 0<x<1), lithium titanate, lithium vanadate and lithium silicate; a conductive polymer such as polyacetylene and poly-p-phenylene; carbonaceous powder such as an artificial graphite like a highly graphitized carbon material and natural graphite; a carbon-based material such as a resin-calcinated carbon material, and the like may be used. The negative electrode active material may be used independently or in combination of two or more.

As the binder resin for the negative electrode film, one or a combination of two or more of the binder resins described above for the positive electrode film may be used. As the binder resin for the negative electrode film, carboxymethyl cellulose, styrene-butadiene rubber, polyacrylic acid, etc., which have good adhesion, are preferable. As the solvent, one or a combination of two or more of the solvents described above for the positive electrode may be used. The dispersant of the slurry for negative electrode films may further contain any additives such as a dispersant and a conductive material. The dispersant may be a surfactant-type dispersant, a resin-type dispersant, and the like. The conductive material may be carbon materials such as carbon black, carbon nanotubes, carbon nanofibers, fullerene, and the like.

The content of the binder resin in the slurry for negative electrode films is preferably 0.1 to 30 mass %, more preferably 0.5 to 20 mass %, and even more preferably 1 to 10 mass % based on the mass of the negative electrode active material (that is, taking the mass of the negative electrode active material as 100 mass %). In the case where the slurry for negative electrode films contains a dispersant, the content of the dispersant in the slurry for negative electrode films is preferably 0.01 to 10 mass %, more preferably 0.05 to 5 mass % based on the mass of the negative electrode active material (that is, taking the mass of the negative electrode active material as 100 mass %). In the case where the slurry for negative electrode films contains a conductive material, the content of the conductive material in the slurry for negative electrode films is preferably 0.01 to 10 mass %, more preferably 0.02 to 5 mass %, and even more preferably 0.03 to 3 mass % based on the mass of the negative electrode active material (that is, taking the mass of the negative electrode active material as 100 mass %).

The solid content in the slurry for negative electrode films is preferably 30 to 90 mass %, more preferably 30 to 80 mass %, and even more preferably 40 to 75 mass % based on the mass of the slurry for negative electrode films (that is, taking the mass of the slurry for negative electrode films as 100 mass %).

The electrolyte may be any of a liquid electrolyte, a gel electrolyte, and a solid electrolyte. For example, the liquid electrolyte may be an electrolyte salt, such as a lithium salt, and a non-aqueous solvent. Various known electrolyte salts in which ions are mobile may be used as the electrolyte salt. For example, lithium salts such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, $LiBPh_4$, and the like (however, Ph is a phenyl group) may be used, but it is not limited thereto. The electrolyte salt is preferably dissolved in a non-aqueous solvent and used as an electrolyte.

The non-aqueous solvent is not particularly limited and may be, for example, a carbonate solvent such as ethylene carbonate, propylene carbonate, butylene carbonate, dimethyl carbonate, ethylmethyl carbonate, and diethyl carbonate; a lactone solvent such as $\gamma$-butyrolactone, $\gamma$-valerolactone, and $\gamma$-octanoic lactone; a glyme solvent such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; an ester solvent such as methyl formate, methyl acetate, and methyl propionate; a sulfoxide solvent such as dimethyl sulfoxide and sulfolane; and a nitrile solvent such as acetonitrile. These solvents may be used independently or in combination of two or more.

The gel electrolyte may be a gel obtained by dissolving a polymer in a liquid electrolyte. The solid electrolyte may be an oxide-based solid electrolyte and a sulfide-based solid electrolyte. The secondary battery may be any of a non-aqueous electrolyte secondary battery using a liquid electrolyte or a gel electrolyte, an all-solid secondary battery using a solid electrolyte, a semi-solid secondary battery, and the like.

The secondary battery may further include a separator. The separator is provided between the positive electrode and the negative electrode. The separator may include, but is not limited to, polyethylene nonwoven fabric, polypropylene nonwoven fabric, polyamide nonwoven fabric, porous polyethylene, porous polypropylene, porous polyamide, etc., and products that have been subjected to hydrophilic treatment.

The structure of the secondary battery in one embodiment is not particularly limited, and generally includes a positive electrode and a negative electrode, and a separator as necessary, and the shape may be a paper shape, a cylindrical shape, a button shape, a laminated shape and the like corresponding to the intended purpose.

The secondary battery of one embodiment may be used for various purposes, for example, vehicles, electronic devices, small communication devices, large capacity batteries, stationary storage batteries, and the like. The vehicles may be electric vehicles, hybrid vehicles, plug-in hybrid vehicles, trains, motorcycles, electric bicycles, motorized bicycles, construction vehicles, and the like. Among the above, electric vehicles, hybrid vehicles, and plug-in hybrid vehicles are in high demand worldwide, and a secondary battery of the same embodiment may be preferably used for these vehicles. Since the dispersibility and storage stability of the lithium iron phosphate-based positive electrode active material are good in the slurry for positive electrode film of one embodiment, the secondary battery obtained by using these has high rate characteristics and high cycle characteristics and may be preferably used for various purposes.

Examples

Hereinafter, the present invention is described more specifically with reference to examples. The present invention is not limited to the following examples as long as it is within the spirit of the present invention. Moreover, unless otherwise mentioned, "part" represents "part by mass" and "%" represents "mass %". In addition, in the examples, "hydrogenated nitrile butadiene rubber" may be referred to as "H-NBR" or "dispersant". Furthermore, in the examples, a "dispersant-containing liquid" that contains a "dispersant" and a solvent may be referred to as "dispersion liquid." In the following description, N-methyl-2-pyrrolidone is also referred to as NMP.

<Measurement of weight average molecular weight (Mw) of hydrogenated nitrile butadiene rubber>

The weight average molecular weight (Mw) of the hydrogenated nitrile butadiene rubber was measured by gel permeation chromatography (GPC) equipped with a RI (suggested refractive index) detector. HLC-8320GPC (manufactured by Tosoh Corporation) was used as the device, three separation columns were connected in series and "TSK-GELSUPERAW-4000", "AW-3000" and "AW-2500" manufactured by Tosoh Corporation were used as fillers in order. N,N-dimethylformamide solution of 30 mM of triethylamine and 10 mM of LiBr was used as an eluent, and the measurement was performed under an oven temperature of 40°C and a flow rate of 0.6 mL/min. The concentration of the measurement sample was adjusted to 1% using a solvent consisting of the above eluent, and 20 microliters of the measurement sample was injected. The weight average molecular weight is a polystyrene equivalent value.

<Measurement of residual double bonds in hydrogenated nitrile butadiene rubber>

The mass ratio of residual double bond (RDB value) of the hydrogenated nitrile butadiene rubber was measured by infrared spectroscopy using a total reflectance measurement method on the samples before and after hydrogenation. The solid copolymer was used as it was for the measurement. The dispersant-containing liquid (dispersant composition) was thoroughly dried by treating with hot air at 100°C for 10 hours, and the resulting solid copolymer was used as a measurement sample. The measurement sample was subjected to IR measurement using an infrared spectrophotometer (Nicoleti S5FT-IR spectrometer manufactured by Thermo Fisher Scientific Co., Ltd.). Since the double bond derived from a conjugated diene monomer unit appears as a peak at 970 $cm^{-1}$, and the hydrogenated single bond appears as a peak at 723 $cm^{-1}$, the hydrogenation rate was calculated from the ratio of the heights of these two peaks.

<Oxidation resistance of hydrogenated nitrile butadiene rubber>

The oxidation resistance of the hydrogenated nitrile butadiene rubber was evaluated by preparing a half cell as described below and measuring the same by linear sweep voltammetry (LSV) using HSV-110 (manufactured by Hokuto Denko Corporation). After adding Denka Black Li-400 (manufactured by Denka Corporation), the following dispersant, and NMP to a plastic container with a capacity of 150 mL, stirring was performed using a rotation-revolution mixer (Awatori Rentaro, ARE-310, manufactured by Thinky Co., Ltd.) at 2,000 rpm for 5 minutes to obtain a slurry for evaluation with a solid content of 10% (solid content ratio Li-400: dispersant = 1:1). The obtained slurry for evaluation was applied onto an aluminum foil having a thickness of 20 $\mu$m, which served as a current collector, using an applicator to prepare an electrode for evaluation. The mass of the electrode for evaluation was measured, and the mass of the aluminum foil used for coating was subtracted to calculate the coating amount (A) of the electrode. The prepared evaluation electrode was punched out to a diameter of 9 mm and used as a working electrode, and a separator made of porous polypropylene film was inserted and laminated between the working electrode and the counter electrode, using metal lithium foil (thickness 0.15 mm) as the counter electrode. Then, a two-electrode sealed metal cell (HS flat cell manufactured by Hosen) was assembled by filling it with an electrolyte (non-aqueous electrolyte in which $LiPF_6$ is dissolved at a concentration of 1M in a 1:1 mixed solvent of ethylene carbonate and diethyl carbonate). The half-cell was assembled in a glow box purged with argon gas. After the half cell was assembled, LSV measurements were performed.

LSV measurement conditions

Measurement potential: +3.0 to +3.8 V

Sweep speed: 10 mV/min

The current value obtained from the LSV measurement was divided by the amount (A) of the electrode coating to calculate the current density mA/mg. The higher the voltage and the smaller the current density, the better the oxidation resistance of the hydrogenated nitrile butadiene rubber. The results of measurements of dispersion liquids 1 and 4 and comparative dispersion liquid 1 are shown in FIG. 1.

Determination criteria

◎: The current density does not reach 1 mA/mg at a voltage of 3.8 V.

○: The current density reaches 1 mA/mg at a voltage of 3.7 V or more to 3.8 V.

△: The current density reaches 1 mA/mg at a voltage of 3.5 V or more and less than 3.7 V.

✕: The current density reaches 1 mA/mg at a voltage of less than 3.5 V.

<Storage stability of slurry for positive electrode film>

After preparation of the slurry for positive electrode film, a 50 mL vial was filled with the slurry and allowed to stand at 25°C for 5 days, after which the solid concentration in the supernatant and at the bottom was measured. The storage stability was calculated according to the formula: ((solid concentration of the supernatant after storage in a container and standing for 5 days)/(solid concentration of the bottom after storage in a container and standing for 5 days))✕ 100. The closer the value is to 100%, the more the sedimentation is suppressed and the better the storage stability is.

Determination criteria

◎: 95% or more

○: 90% or more but less than 95%

△: 85% or more but less than 90%

✕: Less than 85%

<Secondary battery cycle test>

The secondary battery was placed in a thermostatic chamber at 45°C, and charge and discharge measurements were performed using a charging and discharging device (SM-8, manufactured by Hokuto Denko Corporation). One cycle (charge and discharge interval rest time 30 minutes) is a charge-discharge cycle in which the battery is fully charged by constant-current and constant-voltage charging (upper limit voltage 3.8 V, cutoff current 0.025C) at a charge rate of 0.5C, and discharged to a lower discharge limit voltage of 2.0 V at the same constant current rate as during charging. This cycle was repeated for a total of 100 cycles, and the charge and discharge capacity retention rate expressed as the ratio ((electric capacity at the end of 100 cycles/electric capacity at the end of 5 cycles) ✕ 100) (%) of the electric capacity at the end of 100 cycles and the electric capacity at the end of 5 cycles was determined. The larger this value, the more excellent the cycle characteristics.

Determination criteria

◎: Cycle characteristic is 90% or more

○: Cycle characteristic is 80% or more and less than 90%

△: Cycle characteristic is 60% or more and less than 80%

✕: Cycle characteristic is less than 60%

<Synthesis Example 1: Preparation of hydrogenated nitrile butadiene rubber 1>

In a stainless steel polymerization reactor, 30 parts of acrylonitrile, 70 parts of 1,3-butadiene, 3 parts of potassium soap oleate, 0.3 parts of azobisisobutyronitrile, 0.55 parts of t-dodecyl mercaptan, and 200 parts of ion exchange water were added. The polymerization was carried out at 45°C for 20 hours with stirring in a nitrogen gas atmosphere, and was terminated when the conversion rate reached 90%. Unreacted monomers were removed by vacuum stripping to obtain an acrylonitrile-conjugated diene rubber latex having a solid concentration of about 30%. Next, ion exchange water was added to the latex to adjust the total solid concentration to 12%, the mixture was placed in a 1L autoclave equipped with a stirrer, and nitrogen gas was passed through the same for 10 minutes to remove dissolved oxygen in the contents.

A catalyst solution prepared by dissolving 75 mg of palladium acetate as a hydrogenation catalyst in 180 mL of ion exchange water containing 4 times the molar amount of nitric acid with respect to the palladium was added to the autoclave. The atmosphere in the autoclave was replaced with hydrogen gas twice, and the contents of the autoclave were then heated to 50°C under pressure of 3MPa with hydrogen gas, and a hydrogenation reaction was carried out for 6 hours. Next, the autoclave was returned to atmospheric pressure, and 25 mg of palladium acetate as a catalyst for hydrogenation reaction was dissolved in 60 mL of ion exchange water to which nitric acid was added in an amount 4 times the molar amount of Pd, and then added thereto. After the system was replaced with hydrogen gas twice, the contents of the autoclave were heated to 50°C under a pressure of 3MPa with hydrogen gas, and a hydrogenation reaction was carried out for 6 hours. Thereafter, the contents were returned to room temperature, the inside of the autoclave was made into a nitrogen gas atmosphere, and the solid content was dried to recover the hydrogenated nitrile butadiene rubber 1. The hydrogenated nitrile butadiene rubber 1 had a mass ratio of residual double bond (RDB value) of 0.5% as measured by a nuclear magnetic resonance (NMR) spectrometer, and a weight average molecular weight (Mw) of 150,000. Based on the mass of the hydrogenated nitrile butadiene rubber 1, the content of the unit derived from 1,3-butadiene was 70%, and the content of the unit derived from acrylonitrile was 30%. The content of these structural units was determined by utilizing the amount of monomer used, NMR and/or IR (infrared spectroscopy) measurement (hereinafter the same).

<Production Example 1: Preparation of dispersion liquid 1>

9 parts of the hydrogenated nitrile butadiene rubber 1 obtained in Synthesis Example 1 and 91 parts of NMP were added to a stainless steel container 1, and the mixture was stirred for 1 hour using a disper to dissolve, thereby obtaining a dispersion liquid 1 containing the hydrogenated nitrile butadiene rubber 1 and NMP (the same applies below.)

<Production Examples 2 to 7: Dispersion liquids 2 to 7>

Hydrogenated nitrile butadiene rubbers 2 to 7 were synthesized in the same manner as in Synthesis Example 1 above, except that the monomer compositions and catalysts used were changed according to Table 1. It is noted that in the synthesis of hydrogenated nitrile butadiene rubbers 3 and 4, the second stage hydrogenation reaction was not carried out. The weight average molecular weight (Mw) of the synthesized hydrogenated nitrile butadiene rubbers 2 to 7 was about 150,000. Next, dispersion liquids 2 to 7 were obtained in the same manner as in Production Example 1 above, except that the formulations shown in Table 1 were followed. The mass ratio of residual double bond (RDB value) of each hydrogenated nitrile butadiene rubber was as shown in Table 1.

<Production Example 8: Preparation of dispersion liquid 8>

Hydrogenated nitrile butadiene rubber 8 (H-NBR (hydrogenated acrylonitrile-butadiene rubber) Therban (registered trademark) 3406 manufactured by ARLANXEO, acrylonitrile content 34%) and NMP were added to the stainless steel container 1 and stirred for 1 hour using a disper to dissolve, thereby obtaining a dispersion liquid 8 containing hydrogenated nitrile butadiene rubber 8 and NMP. The mass ratio of residual double bond (RDB value) of the hydrogenated nitrile butadiene rubber 8 was measured using a nuclear magnetic resonance apparatus (NMR) and was found to be 0.8%.

<Production Example 9: Preparation of dispersion liquid 9>

16 parts of NaOH and 84 parts of NMP were placed in the stainless steel container 1 and stirred for 1 hour using a disper to prepare a suspension of NaOH. Next, the solution of the suspension of NaOH and the dispersion liquid 1 of Production Example 1 was placed in a stainless steel container 2 so that the amount of NaOH was 5 parts based on 100 parts of the hydrogenated nitrile butadiene rubber 1, and the solution was stirred for 2 hours with a disper, thereby obtaining a dispersion liquid 9 containing NaOH, the hydrogenated nitrile butadiene rubber 1, and NMP.

<Production Examples 10 to 12: Preparation of dispersion liquids 10 to 12>

Dispersion liquids 10 to 12 were obtained in the same manner as in Production Example 9 above, except that the types of bases used were changed according to Table 1.

<Comparative Synthesis Example: Preparation of hydrogenated butadiene rubber 9>

In a stainless steel polymerization reactor, 30 parts of acrylonitrile, 70 parts of 1,3-butadiene, 3 parts of potassium soap oleate, 0.3 parts of azobisisobutyronitrile, 0.55 parts of t-dodecyl mercaptan, and 200 parts of ion exchange water were added. The polymerization was carried out at 45°C for 20 hours with stirring in a nitrogen gas atmosphere, and was terminated when the conversion rate reached 90%. Unreacted monomers were removed by vacuum stripping to obtain an acrylonitrile-conjugated diene rubber latex having a solid concentration of about 30%. Next, ion exchange water was added to the latex to adjust the total solid concentration to 12%, the mixture was placed in a 1L autoclave equipped with a stirrer, and nitrogen gas was passed through the same for 10 minutes to remove dissolved oxygen in the contents.

120 mg of rhodium chloride trihydrate as a hydrogenation catalyst was added to the autoclave. The atmosphere in the autoclave was replaced with hydrogen gas twice, and the contents of the autoclave were then heated to 100°C under pressure of 6MPa with hydrogen gas, and a hydrogenation reaction was carried out for 4 hours. Thereafter, the contents were returned to room temperature, the inside of the autoclave was made into a nitrogen gas atmosphere, and the solid content was dried to recover the hydrogenated nitrile butadiene rubber 9. The hydrogenated nitrile butadiene rubber 9 had a mass ratio of residual double bond (RDB value) of 77.0%, and a weight average molecular weight (Mw) of 150,000. Based on the mass of the hydrogenated nitrile butadiene rubber 9, the content of the structural unit derived from 1,3-butadiene was 70%, and the content of the structural unit derived from acrylonitrile was 30%. The content of these structural units was determined by utilizing the amount of monomer used, and NMR (nuclear magnetic resonance) and/or IR (infrared spectroscopy) measurements.

<Comparative Production Example 1: Preparation of dispersion liquid 1>

9 parts of the hydrogenated nitrile butadiene rubber 9 obtained in Comparative Synthesis Example 1 and 91 parts of NMP were added to the stainless steel container 1, and the mixture was stirred for 1 hour using a disper to dissolve, thereby obtaining a dispersion liquid 1 containing the hydrogenated nitrile butadiene rubber 9 and NMP.

The abbreviations shown in the monomer column in Table 1 have the following meanings.

BD: 1,3-butadiene
AN: Acrylonitrile
AAm: Acrylamide

[Table 1]

| Dispersion liquid | Hydrogenated nitrile butadiene rubber | Monomer | | | Catalyst | | | Mass ratio of residual double bond (RBD value) | Alkali | Oxidation Resistance |
|---|---|---|---|---|---|---|---|---|---|---|
| | | BD | AN | AAm | Type | First stage | Second stage | | | |
| Dispersion liquid 1 | Hydrogenated nitrile butadiene rubber 1 | 70 | 30 | | Palladium acetate | 75 mg | 25 mg | 0.5% | | ◎ |
| Dispersion liquid 2 | Hydrogenated nitrile butadiene rubber 2 | 70 | 30 | | Palladium acetate | 90 mg | 25 mg | 0.1% | | ◎ |
| Dispersion liquid 3 | Hydrogenated nitrile butadiene rubber 3 | 70 | 30 | | Palladium acetate | 75 mg | - | 5.0% | | ○ |
| Dispersion liquid 4 | Hydrogenated nitrile butadiene rubber 4 | 70 | 30 | | Palladium acetate | 50 mg | - | 9.8% | | △ |
| Dispersion liquid 5 | Hydrogenated nitrile butadiene rubber 5 | 55 | 45 | | Palladium acetate | 75 mg | 25 mg | 0.7% | | ◎ |
| Dispersion liquid 6 | Hydrogenated nitrile butadiene rubber 6 | 79 | 21 | | Palladium acetate | 75 mg | 25 mg | 0.3% | | ◎ |
| Dispersion liquid 7 | Hydrogenated nitrile butadiene rubber 7 | 68 | 30 | 2 | Palladium acetate | 75 mg | 25 mg | 1.0% | | ◎ |
| Dispersion liquid 8 | Hydrogenated nitrile butadiene rubber 8 | - | - | | - | | | 0.8% | | ◎ |
| Dispersion liquid 9 | Hydrogenated nitrile butadiene rubber 1 | 70 | 30 | | Palladium acetate | 75 mg | 25 mg | 0.5% | NaOH | ◎ |
| Dispersion liquid 10 | Hydrogenated nitrile butadiene rubber 1 | 70 | 30 | | Palladium acetate | 75 mg | 25 mg | 0.5% | KOH | ◎ |
| Dispersion liquid 11 | Hydrogenated nitrile butadiene rubber 8 | - | - | | - | | | 0.8% | NaOH | ◎ |
| Dispersion liquid 12 | Hydrogenated nitrile butadiene rubber 8 | - | - | | - | | | 0.8% | KOH | ◎ |
| Comparative dispersion liquid 1 | Hydrogenated nitrile butadiene rubber 9 | 70 | 30 | | Rhodium chloride trihydrate | 120 mg | | 77.0% | | × |

<Production of carbon-coated lithium iron phosphate 1 (LFP1)>

Ammonium dihydrogen phosphate ($NH_4H_2PO_4$) and iron chloride ($FeCl_3$) were weighed so that the elemental ratio of phosphorus and iron was 1:1, after preparing aqueous solutions of both, aqueous ammonia was added to an aqueous solution of ammonium dihydrogen phosphate ($NH_4H_2PO_4$), and while stirring, an aqueous solution of iron chloride ($FeCl_3$) was added dropwise to obtain a yellow-white precipitate. Subsequently, the mixture was filtered, washed with water, dried, and pulverized to obtain amorphous $FePO_4 \cdot nH_2O$.

Next, the amorphous $FePO_4 \cdot nH_2O$ was filled into an alumina crucible, fired in an electric furnace under a nitrogen gas atmosphere at 500°C for 10 hours, cooled, and pulverized using a jet mill to obtain the crystalline $\alpha$-$FePO_4$.

The crystalline $\alpha$-$FePO_4$ powder, lithium acetate ($CH_3COOLi$), and natural wax Carnauba No. 2 (manufactured by Toyo ADL Corporation) (melting point 80 to 87°C) were weighed so that the elemental ratio of iron and lithium is 1:1 and the content of Carnauba No. 2 in the raw material mixture is 5.0%, after pulverizing and mixing in a mortar, it is filled into an alumina crucible, firing was performed at 750°C for 5 hours in an electric furnace under a nitrogen gas atmosphere, and the obtained fired product was ground in a mortar to obtain LFP1, which is a lithium iron phosphate compound having a carbon-coated olivine structure.

The obtained LFP1 had a crystallite diameter of 75 nm as determined by XRD (X-ray diffraction analysis), a carbon content of 2.3% as determined by CHN elemental analysis, a BET specific surface area of 36 $m^2$/g and a pore volume of 0.20 $cm^3$/g as determined by nitrogen gas adsorption measurement, and an average primary particle diameter of 95 nm as determined by SEM (scanning electron microscope) observations.

<Production of carbon-coated lithium iron phosphate 2 (LFP2)>

The crystalline $\alpha$-$FePO_4$ powder described above, lithium carbonate ($Li_2CO_3$), and terephthalic acid (melting point 402°C), which is an aromatic carboxylic acid, were weighed so that the elemental ratio of iron and lithium is 1:1 and the content of terephthalic acid in the raw material mixture is 10.0%, after pulverizing and mixing in a mortar, it is filled into an alumina crucible, firing was performed at 700°C for 5 hours in an electric furnace under a nitrogen gas atmosphere, and the obtained fired product was ground in a mortar to obtain LFP2, which is a lithium iron phosphate compound having a carbon-coated olivine structure.

The obtained LFP2 had a crystallite diameter of 210 nm as determined by XRD (X-ray diffraction analysis), a carbon content of 6.8% as determined by CHN elemental analysis, a BET specific surface area of 10 $m^2$/g and a pore volume of 0.05 $cm^3$/g as determined by nitrogen gas adsorption measurement, and an average primary particle diameter of 315 nm as determined by SEM (scanning electron microscope) observations. Many large aggregated particles were observed due to fusion between particles.

<Preparation of slurry for positive electrode film>

<Example A-1>

According to the composition shown in Table 2, after adding 3 parts of the dispersion liquid 1 equivalent to the solid content thereof and 3 parts of an NMP solution equivalent to the solid content thereof, in which 9 mass % PVDF (polyvinylidene fluoride, Solef #5130 (manufactured by Solvey Corporation)) was dissolved, to a plastic container with a capacity of 150 mL, 94 parts of LFP1 was added as a positive electrode active material, and the mixture was stirred at 2,000 rpm for 20 minutes using a rotation-revolution mixer (Awatori Rentaro, ARE-310, manufactured by Thinky Co., Ltd.). Thereafter, NMP was further added, and the mixture was stirred for 30 seconds at 2,000 rpm using a rotation-revolution mixer to obtain a slurry for positive electrode film of Example A-1 having a solid content of 62%.

<Example A-2 to A-14, Comparative Example A-1>

The slurry for positive electrode film A-2 to A-13 and Comparative Examples A-1 and A-2 were prepared according to the same procedure as for Example A-1, except that the type of dispersion liquid was changed.

<Example A-15>

After adding 3 parts of the dispersion liquid 1 equivalent to the solid content thereof, 3 parts of an NMP solution equivalent to the solid content thereof, in which 9 mass % PVDF was dissolved, and 1 part of carbon nanotube (K-Nanos100T (KumhoPetrochemical Co., Ltd.)) to a plastic container with a capacity of 150 mL, 93 parts of LFP1 was added as a positive electrode active material, and the mixture was stirred at 2,000 rpm for 20 minutes using a rotation-revolution mixer (Awatori Rentaro, ARE-310, manufactured by Thinky Co., Ltd.). Thereafter, NMP was further added, and the mixture was stirred for 30 seconds at 2,000 rpm using a rotation-revolution mixer to obtain a slurry for positive electrode film of Example A-15 having a solid content of 62%.

[Table 2]

| Examples | Dispersion liquid | Amount Added (parts) | Positive electrode active material | Amount Added (parts) | Binder | Amount Added (parts) | Storage Stability |
|---|---|---|---|---|---|---|---|
| Example A-1 | Dispersion liquid 1 | 3 | LFP1 | 94 | PVDF | 3 | ◎ |
| Example A-2 | Dispersion liquid 2 | 3 | LFP1 | 94 | PVDF | 3 | ◎ |
| Example A-3 | Dispersion liquid 3 | 3 | LFP1 | 94 | PVDF | 3 | ◎ |
| Example A-4 | Dispersion liquid 4 | 3 | LFP1 | 94 | PVDF | 3 | ○ |
| Example A-5 | Dispersion liquid 5 | 3 | LFP1 | 94 | PVDF | 3 | ◎ |
| Example A-6 | Dispersion liquid 6 | 3 | LFP1 | 94 | PVDF | 3 | ◎ |
| Example A-7 | Dispersion liquid 7 | 3 | LFP1 | 94 | PVDF | 3 | ◎ |
| Example A-8 | Dispersion liquid 8 | 3 | LFP1 | 94 | PVDF | 3 | ◎ |
| Example A-9 | Dispersion liquid 9 | 1 | LFP1 | 94 | PVDF | 3 | ◎ |
| Example A-10 | Dispersion liquid 10 | 3 | LFP1 | 94 | PVDF | 3 | ◎ |
| Example A-11 | Dispersion liquid 11 | 3 | LFP1 | 94 | PVDF | 3 | ◎ |
| Example A-12 | Dispersion liquid 12 | 3 | LFP1 | 94 | PVDF | 3 | ◎ |
| Example A-13 | Dispersion liquid 9 | 1 | LFP1 | 96 | PVDF | 3 | ◎ |
| Example A-14 | Dispersion liquid 1 | 3 | LFP2 | 94 | PVDF | 3 | ○ |
| Example A-15 | Dispersion liquid 2 | 3 | LFP1 | 93 | PVDF | 3 | △ |
| Comparative Example A-1 | Comparative dispersion liquid 1 | 3 | LFP1 | 94 | PVDF | 3 | × |
| ※In Example A-15, 1 part of CNT is added. | | | | | | | |

As may be seen from Table 2, in Examples A-1 to A-15, slurries for positive electrode films with excellent storage stability were obtained.

On the other hand, the storage stability of Comparative Example A-1 was poor. It is inferred that Comparative Example A-1 had a large number of residual double bonds, so the affinity of the solvent was low, and LFP1 having a large specific surface area is unable to be dispersed. Further, since the carbon nanotube was added to the slurry for positive electrode film of Example A-15, it is inferred that the dispersion effect of the dispersant 1 was absorbed by the carbon nanotube, and the storage stability of LFP 1 was not very excellent.

<Preparation of secondary battery>

<Preparation of mixture slurry for standard negative electrode>

After adding Denka Black Li-400 (manufactured by Denka Corporation), CMC #1190 (manufactured by Daicel FineChem Corporation), and water to a plastic container with a capacity of 150 mL, the mixture was stirred at 2,000 rpm for 30 seconds using a rotation-revolution mixer (Awatori Rentaro, ARE-310, manufactured by Thinky Co., Ltd.). Furthermore, artificial graphite CGB-20 (manufactured by Nippon Graphite Industries, Co.,Ltd.) was added as a negative electrode active material, and the mixture was stirred at 2,000 rpm for 150 seconds using a rotation-revolution mixer. SBR (styrene butadiene rubber, TRD2001 (manufactured by JSR Corporation, solid content 48%)) was then added, and the mixture was stirred at 2,000 rpm for 30 seconds using a rotation-revolution mixer to obtain a mixture slurry for standard negative electrode. The solid content of the mixture slurry for standard negative electrode was 48 mass%. The solid content ratio of the negative electrode active material:conductive material:CMC:SBR in the mixture slurry for standard negative electrode was 97:0.5:1:1.5.

<Preparation of standard negative electrode film>

The mixture slurry for standard negative electrode was applied to a copper foil having a thickness of 20 $\mu$m as a current collector using an applicator, and then was dried in an electric oven at 80°C$\pm$5°C for 25 minutes to adjust the weight per unit area of the electrode to 10 mg/cm$^2$. Furthermore, a roll process was performed using a roll press (3t hydraulic roll press manufactured by Thank-Metal Co., Ltd.) to prepare a negative electrode film with a density of the negative electrode mixture layer of 1.5 g/cm$^3$.

<Example B-1>

The slurry of Example A-1 was applied to an aluminum foil having a thickness of 20 $\mu$m as a current collector using an applicator, and then was dried in an electric oven at 120°C$\pm$5°C for 25 minutes to adjust the weight per unit area of the positive electrode to 20 mg/cm$^2$. Furthermore, a roll process was performed using a roll press (3t hydraulic roll press manufactured by Thank-Metal Co., Ltd.) to prepare a positive electrode film B-1 with a density of the positive electrode mixture layer of 3.1 g/cm$^3$.

The above-mentioned standard negative electrode and the above-mentioned positive electrode film B-1 were each punched out in dimensions of 50 mm $\times$ 45 mm and 45 mm $\times$ 40 mm, respectively, and were placed into an aluminum laminated bag along with the separator (a porous polypropylene film) to be inserted therebetween, and the assembly was then dried in an electric oven at 70°C for 1 hour. Next, 2 mL of electrolyte was poured into a glove box filled with argon gas, and the aluminum laminated bag was sealed to prepare a secondary battery of Example B-1. For the electrolyte, a mixed solvent was prepared by mixing ethylene carbonate, dimethyl carbonate, and diethyl carbonate in a ratio of 1:1:1 (volume ratio); furthermore, as an additive, 1 part of VC (vinylene carbonate) was added to 100 parts of the electrolyte, and then LiPF$_6$ was dissolved in the non-aqueous electrolyte at a concentration of 1M. The cycle characteristics of the obtained secondary battery were evaluated, and the results are shown in Table 3.

<Examples B-2 to B-15, Comparative Example B-1>

Positive electrode films were prepared, respectively, and the secondary batteries of Examples B-2 to B-15 and Comparative Example B-1 were prepared according to the same procedure as in Example B-1 above, except that slurries for positive electrode films A-2 to A-15 and Comparative Example A-1 were used. The cycle characteristics of the obtained secondary battery were evaluated, and the results are shown in Table 3.

[Table 3]

| Examples | Cycle characteristics |
|---|---|
| Example B-1 | ○ |
| Example B-2 | ○ |
| Example B-3 | ○ |
| Example B-4 | ○ |
| Example B-5 | ○ |
| Example B-6 | ○ |

(continued)

| Examples | Cycle characteristics |
|---|---|
| Example B-7 | ○ |
| Example B-8 | ○ |
| Example B-9 | ◎ |
| Example B-10 | ◎ |
| Example B-11 | ◎ |
| Example B-12 | ◎ |
| Example B-13 | ◎ |
| Example B-14 | Δ |
| Example B-15 | Δ |
| Comparative Example B-1 | × |

As may be seen from Table 3, in Examples B-1 to B-15, secondary batteries with excellent cycle characteristics were obtained. Although Example B-14 and Example B-15 do not achieve results of extremely excellent cycle characteristics, good cycle characteristics are obtained. From the results of Example B-14, although the dispersibility of the positive electrode active material is good, when the amount of carbon coating on the positive electrode active material is large, it is inferred that the decrease in the reactivity between lithium ions and the lithium iron phosphate-based positive electrode active material causes a deterioration in cycle characteristics. From the results of Example B-15, when the carbon nanotube is added as a conductive assistant to the slurry for positive electrode film, it is assumed that the decrease in dispersibility of the positive electrode active material causes a deterioration in cycle characteristics. On the other hand, the cycle characteristics of Comparative Example B-1 were poor. It is inferred that in Comparative Example B-1, the dispersion of the active material is insufficient, resulting in a high mass ratio of residual double bond in the hydrogenated nitrile butadiene rubber at 77%, and the double bond sites underwent oxidative degradation, leading to poor cycle characteristics.

Although the present invention has been described above with reference to the embodiment, the present invention is not limited to the above. The configuration and details of the present invention may be modified in various ways within the scope of the invention as understood by those skilled in the art.

The disclosure of this application is related to the subject matter described in Japanese Patent Application No. 2022-059257, filed with the Japan Patent Office on March 31, 2022, the entire disclosure of which is incorporated herein by reference.

## Claims

1. A slurry for positive electrode film, comprising a lithium iron phosphate-based positive electrode active material, a dispersant, a binder resin, and a solvent, and

   the dispersant comprising a copolymer (A), the copolymer (A) having a nitrile group-containing structural unit and a structural unit derived from a conjugated diene in which unsaturated bonds are partially hydrogenated and having a mass ratio of residual double bond (RDB) calculated by the following formula (1) satisfies 0.05 to 5 mass %:

$$RDB \ (mass \ \%) = (BD \ / \ (BD + HBD)) \ x \ 100 \quad (1)$$

   (in formula (1), BD is a mass ratio of a structural unit derived from a conjugated diene having an unsaturated bond based on a total mass of a structural unit derived from a conjugated diene, and HBD is a mass ratio of a structural unit derived from a conjugated diene in which an unsaturated bond is hydrogenated to a total mass of a structural unit derived from a conjugated diene).

2. The slurry for positive electrode film according to claim 1, wherein the lithium iron phosphate-based positive electrode active material is coated with carbon.

3. The slurry for positive electrode film according to claim 1, wherein the lithium iron phosphate-based positive electrode active material is coated with carbon, and a content of the carbon is 0.1 parts by mass or more and 10 parts by mass or less based on 100 parts by mass of the lithium iron phosphate-based positive electrode active material coated with carbon.

4. The slurry for positive electrode film according to any one of claims 1 to 3, wherein the lithium iron phosphate-based positive electrode active material has a BET specific surface area determined by nitrogen adsorption measurement of 1 m$^2$/g or more and 50 m$^2$/g or less.

5. The slurry for positive electrode film according to any one of claims 1 to 4, wherein a content of a conductive assistant is 0.5 mass % or less with respect to 100 parts by mass of solid content of a slurry for positive electrode film.

6. The slurry for positive electrode film according to claim 5, which does not comprise the conductive assistant.

7. A slurry for positive electrode film, comprising a lithium iron phosphate-based positive electrode active material, a dispersant, a binder resin, and a solvent, and not comprising a conductive assistant, and

the dispersant comprising a copolymer (A), the copolymer (A) having a nitrile group-containing structural unit and a structural unit derived from a conjugated diene in which unsaturated bonds are partially hydrogenated and having a mass ratio of residual double bond (RDB) calculated by the following formula (1) satisfies 0.05 to 10 mass %:

$$RDB \text{ (mass \%)} = (BD / (BD + HBD)) \text{ x } 100 \quad (1)$$

(in formula (1), BD is a mass ratio of a structural unit derived from a conjugated diene having an unsaturated bond based on a total mass of a structural unit derived from a conjugated diene, and HBD is a mass ratio of a structural unit derived from a conjugated diene in which an unsaturated bond is hydrogenated to a total mass of a structural unit derived from a conjugated diene).

8. The slurry for positive electrode film according to any one of claims 1 to 7, wherein the copolymer (A) has a total content of a nitrile group-containing structural unit and a structural unit derived from a conjugated diene in which unsaturated bonds are partially hydrogenated of 80 mass % or more and 100 mass % or less based on a mass of the copolymer (A).

9. A positive electrode film, obtained by using the slurry for positive electrode film according to any one of claims 1 to 8.

10. A secondary battery, comprising a positive electrode, a negative electrode, and an electrolyte, the positive electrode comprising a positive electrode film obtained by using the slurry for positive electrode film according to any one of claims 1 to 8.

11. A method for producing a positive electrode film using the slurry for positive electrode film according to any one of claims 1 to 8, wherein a step of adding a conductive assistant to the slurry for positive electrode film is not included in a step of forming the positive electrode film using the slurry for positive electrode film.

FIG. 1

| INTERNATIONAL SEARCH REPORT | International application No. |
|---|---|
| | **PCT/JP2023/008637** |

**A. CLASSIFICATION OF SUBJECT MATTER**

*H01M 4/1397*(2010.01)i; *C09K 23/52*(2022.01)i; *H01M 4/136*(2010.01)i; *H01M 4/36*(2006.01)i; *H01M 4/58*(2010.01)i
FI: H01M4/1397; C09K23/52; H01M4/136; H01M4/36 C; H01M4/58

According to International Patent Classification (IPC) or to both national classification and IPC

**B. FIELDS SEARCHED**

Minimum documentation searched (classification system followed by classification symbols)

H01M4/1397; C09K23/52; H01M4/136; H01M4/36; H01M4/58

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-157086 A (NIPPON ZEON CO., LTD.) 15 August 2013 (2013-08-15) | 1-11 |
| A | JP 2018-534220 A (LG CHEM, LTD.) 22 November 2018 (2018-11-22) | 1-11 |
| A | KR 10-2017-0111749 A (LG CHEM, LTD.) 12 October 2017 (2017-10-12) | 1-11 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
**Information on patent family members**

| International application No. |
| --- |
| **PCT/JP2023/008637** |

| Patent document cited in search report | | | Publication date (day/month/year) | Patent family member(s) | | | Publication date (day/month/year) |
| --- | --- | --- | --- | --- | --- | --- | --- |
| JP | 2013-157086 | A | 15 August 2013 | (Family: none) | | | |
| JP | 2018-534220 | A | 22 November 2018 | US | 2019/0051887 | A1 | |
| | | | | WO | 2017/052087 | A1 | |
| | | | | EP | 3355392 | A1 | |
| | | | | KR | 10-2017-0037510 | A | |
| | | | | CN | 108370037 | A | |
| KR | 10-2017-0111749 | A | 12 October 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016149296 A
- JP 2017154592 W
- JP 2012521065 W
- JP 2020515014 W
- JP 2020515012 W
- JP 6933285 B
- JP 2018522803 W
- JP 2012146639 A
- JP 2022059257 A